# EUROPÄISCHE PATENTSCHRIFT

(11) **EP 0 656 278 B1**
(45) Veröffentlichungstag und Bekanntmachung des Hinweises auf die Patenterteilung: **11.02.1998**
(21) Anmeldenummer: 94116961.7
(22) Anmeldetag: 27.10.1994
(51) Int. Cl.: B60N 2/24, B60N 2/44, A47C 7/18

(54) **Fahrzeugsitz mit einem Sitzpolster, insbesondere Flugzeugsitz**
Vehicle seat with a cushion, particularly airplane seat
Siège de véhicule avec un coussin, en particulier siège d'avion

(30) Priorität: 03.11.1993 AT 2209/93
(43) Veröffentlichungstag der Anmeldung: 07.06.1995
(73) Patentinhaber: C.A. GREINER & SÖHNE GESELLSCHAFT M.B.H., A-4550 Kremsmünster (AT)
(72) Erfinder: Weingartner, Rudolf, Ing., A-4501 Neuhofen a.d. Krems (AT); Möseneder, Johann, A-4710 Grieskirchen (AT)
(74) Vertreter: Secklehner, Günter, Dr.

(56) Entgegenhaltungen:
- EP-A- 0 438 186
- WO-A-88/09731
- US-A- 4 060 280
- US-A- 4 463 465
- US-A- 5 283 918

## Beschreibung

Die Erfindung betrifft einen Sitzpolster, insbesondere einen Flugzeugsitz, wie dieser, im Oberbegriff des Patentanspruches 1 beschrieben ist.

Es ist ein Fahrzeugsitz mit einem Sitzpolster mit einem aus einem Kunststoffschaum gebildeten Stützkörper gemäß WO 88/09731 A1 der gleichen Anmelderin, die den Oberbegriff des Patentanspruches 1 repräsentiert, bekannt. Der Stützkörper umfaßt einen Tragteil aus einem elastischen Kunststoffschaum mit einem ersten Raumgewicht, einen Aufsatzteil aus einem elastischen Kunststoffschaum mit einem Zweiten zum Raumgewicht des Tragteils geringeren Raumgewicht sowie einen weiteren aus Kunststoffschaum gebildeten Einsatzteil. Dieser Einsatzteil ist zumindest über einen Teilbereich der Dicke des Tragteils und/oder des Aufsatzteils zwischen einer vorderen und/oder hinteren Stirnkante des Trag- und/oder Aufsatzteils und etwa einem Mittelteil desselben angeordnet und kann gegebenenfalls einen Teil der den Stützkörper zumindest bereichsweise abdeckenden Umhüllung ausbilden. Weiters umfaßt dieser Sitzpolster noch einen Bezugsstoff sowie gegebenenfalls eine zwischen dem Stützkörper und dem Bezugsstoff angeordnete, flammfeste, aus gitter- bzw. netzförmig verlegten, hochtemperaturbeständigen Fasern bzw. Fäden gebildete Zwischenschicht. Dieser Sitzaufbau hat sich in der Praxis an sich gut bewährt, wobei jedoch nicht in allen Anwendungsfällen, insbesondere bei hohen sowie lange andauernden Belastungen das Auslangen gefunden werden konnte.

Ein weiterer bekannter Sitz mit einem Polster - gemäß WO 87/06894 A1 der gleichen Anmelderin - besteht aus einem Stützkörper aus einem offenzelligen, elastischen Kunststoffschaum mit einem ersten Raumgewicht und einer Flammschutzschicht aus einem offenzelligen, mit Flammschutzmittel versehenem, elastischen Kunststoffschaum mit einem zweiten zum ersten unterschiedlichen Raumgewicht. Der Kunststoffschaum und die Flammschutzschicht sind miteinander, insbesondere durch einen Schäumvorgang verbunden und mit einem schwer entflammbaren Bezugsstoff umgeben. Um eine ausreichende Luftdurchlässigkeit eines derartigen Polsters zu erzielen, wurde auch vorgeschlagen, nach Fertigstellung des Polsters Nadeln hindurchzustoßen, sodaß ein entsprechender Luftaustausch möglich ist. Diese Polster haben sich in der Praxis an sich sehr gut bewährt, es hat sich jedoch gezeigt, daß vor allem bei extremen Witterungsbedingungen oder unter verschiedenen klimatischen Verhältnissen der Sitzkomfort der Sitze für den geplanten Einsatzzweck in Fahrzeugen nicht ausreichend war.

Weiters sind bereits Sitze für öffentliche Verkehrsmittel bekannt - gemäß DE 85 06 816 U -, die einen Sitzpolster aufweisen, der mit einem Sitzbezug abgedeckt ist, wobei der Sitzbezug und der Sitzpolster aus einem schwer entflammbaren und raucharmen Material besteht. Vielfach wird dabei so vorgegangen, daß zwischen dem schwer entflammbaren Sitzbezug und dem meist aus Kunststoffschaum bestehenden Sitzpolster eine Glasfasermatte angeordnet wird, die ein Durchbrennen des Sitzbezuges in Richtung des Sitzpolsters verhindern soll. Dabei hat sich jedoch gezeigt, daß in vielen Fällen die Flammeinwirkung vom Boden her entsteht und der Kunststoffschaum des Sitzpolsters dazu neigt, unter starker Rauchentwicklung zu verbrennen, wodurch die öffentlichen Verkehrsmittel im Brandfall in kürzester Zeit so verqualmt sind, daß eine Orientierung für Insassen kaum mehr möglich ist. Dementsprechend ist bei diesem bekannten Sitz vorgesehen, daß unterhalb des Sitzpolsters in dem Traggestell des Sitzes eine feuerhemmende Platte angeordnet wird. Dies bedingt die Verwendung eines speziellen Profils zur Halterung des Sitzpolsters sowie einen zusätzlichen Aufwand durch die Anordnung der feuerhemmenden Platte. Auch bei dieser Ausführungsform konnte die Sitzbelüftung nicht befriedigen.

Sitze mit Polster aus Schaumkunststoff sind im modernen Fahrzeugbau sehr weit verbreitet. Vor allem werden sie in Schienen- und Straßenfahrzeugen aber in überwiegendem Maß auch in Flugzeugen eingesetzt. Während bereits die für Schienenfahrzeuge geltenden Vorschriften hinsichtlich der selbstverlöschenden Ausbildung der verwendeten Materialien bzw. der Rauchentwicklung sehr strenge Richtlinien vorschreiben, so werden diese von den in der Flugzeugindustrie geltenden Vorschriften aber noch übertroffen. So ist bei für den Einsatz in Flugzeugen zugelassenen Sitzen eine Prüfung vorgeschrieben, bei der die Polster in ihrer zum Einbau vorgesehenen Ausstattung einer Flamme aus einem Brenner direkt ausgesetzt werden. Diese Flamme wirkt über eine Zeitdauer von 2 Minuten direkt auf den Polster ein, wonach die Flamme abgelöscht bzw. entfernt wird. Der Polster wird, falls bis dahin die Flammen nicht selbst erloschen sind, nach 5 Minuten gelöscht. Nach diesem Brandtest darf der Gewichtsverlust des Polsters nicht höher als 10 % sein. Um diese äußerst strengen Vorschriften zu erfüllen, gleichzeitig auch einen hohen Sitzkomfort in den Sitzen bei den lang andauernden Flugreisen und ein geringes Gewicht zu erzielen, wurden Sitzpolster aus verschiedenen, mit Flammschutzmitteln versehenen, offenzelligen, elastischen Weichschaumkunststoffen mit unterschiedlichen Raumgewichten zusammengeklebt.

Ein derartiger bekannter Fahrzeugsitz - gemäß EP-A1 190 064 - besteht aus mehreren Lagen Nadelvlies, die von einem flammfesten Bezugsstoff umhüllt sind. Zwischen dem Bezugsstoff und den einzelnen Lagen aus Nadelvlies sind zur Verringerung von Schäden durch Vandalen Verstärkungsmatten aus Metall bzw. Glasfasern angeordnet. Durch das Verkleben der einzelnen Schichten und die vielfachen Zwischenlagen dieser Vandalenschutzschicht ist bei dem bekannten Fahrzeugsitz eine ausreichende Durchlüftung noch kaum erzielbar.

Bei einem anderen bekannten Sitz für Flugzeuge ist, um die komplizierte räumliche Formgebung der Sitzpolster einfacher zu realisieren, der Stützkörper aus einem mit Flammschutzmitteln versetzten, in einer Form einstückig geschäumten Teil gebildet, dessen Oberfläche mit einer Flammschutzschicht und danach mit einem flammfesten Bezugsstoff überzogen wird. Mit den bekannten Sitzen konnten jedoch die neuen verschärften Sicherheitsbestimmungen und Prüfungsvorschriften für Flugzeugsitze nicht erfüllt werden.

Der Erfindung liegt die Aufgabe zugrunde, einen Sitzpolster zu schaffen, der den außergewöhnlichen Belastungen von Sitzpolstern, insbesondere in öffentlichen Fahrzeugen, vor allem von Flugzeugsitzen gerecht wird und bei einer langen Lebensdauer eine einfache Wartung, insbesondere Reinhaltung des Sitzpolsters und einen auch über längere Benutzungsdauer einwandfreien Sitzkomfort ermöglicht.

Diese Aufgabe der Erfindung wird durch die im Kennzeichenteil des Patentanspruches 1 angegebene Merkmalskombination gelöst. Vorteilhaft ist bei dieser Ausbildung des Fahrzeugsitzes, daß durch die größere Härte des Einsatzteils eine höher - feste Widerstandszone gebildet ist, die sich in Richtung der Dicke des Sitzpolsters weniger zusammendrückt, als die umgebenden Bereiche des Trag- und/oder Aufsatzteils. Damit wirkt dieser Einsatzteil aufgrund seines höheren Verformungswiderstandes bei Druckbelastungen in Art einer Barriere bzw. Schwelle, die verhindert, daß durch das höhere Gewicht beim Sitzen mit dem Gesäß im Bereich der Stirnkante des Sitzpolsters eine gegen die Aufstandsfläche des Fahrzeugsitzes geneigte schiefe Ebene entsteht, die dem Benutzer des Fahrzeugsitzes das Gefühl vermittelt, daß er aus dem Sitz herausrutscht. Durch diese Schwellenwirkung wird ein Haltewiderstand aufgebaut, der den Benutzer auch bei schlechter Sitzhaltung bzw. in einer Sitzstellung, bei der sich das Gesäß im vorderen Randbereich des Fahrzeugsitzes befindet, das Gefühl vermittelt, daß er auch bei einer Schräglage im Sitz eine ruhige entspannte Sitzposition einnehmen kann, ohne das Gefühl zu haben, im nächsten Moment von dem Sitz am Boden hinunterzurutschen. Durch diese Schwellwirkung ist es nunmehr auch möglich, daß ein derartiger Sitzpolster die strengen Prüfungen, insbesondere bei einer in Sitzrichtung schräg nach vorn geneigten Belastung in Höhe bis zu 16 g aufnehmen kann, ohne daß die Schutzwirkung des Polsters verlorengeht und der Benutzer aus dem Sitz herausrutscht. Dazu kommt, daß durch diese gezielte Verstärkung insbesondere dem Schutzwall im Bereich der Stirnseite des Fahrzeugsitzes die elastischen Eigenschaften und das Wohlbefinden durch den weichen Aufsatzteil bzw. die Mittelschicht noch besser zum Tragen kommen und die Elastizitätseigenschaften unter dieser Versteifung der Randzone in dem der Kniekehle zugeordneten Sitzbereich nicht nachteilig verändert werden. Damit wird ein verbesserter Sitzkomfort, trotz des Einbaus eines in sich härteren und steiferen Einsatzteils wider Erwarten erreicht und damit auch die Tragfähigkeit und die Lebensdauer des Sitzpolsters durch die gezielte Verstärkung in diesem vorderen Bereich unterstützt. Dazu kommt, daß damit auch die Lebensdauer und die Federungseigenschaften des Aufsatzteils verbessert werden, da dieser vor Überbeanspruchungen im Bereich der vorderen Stirnkante des Sitzpolsters, durch übermäßiges Zusammendrücken in Dickenrichtung und damit erhöhten Walkbeanspruchungen gegenüber dem Traggestell für den Sitzpolster geschützt ist. Weiters ist es nunmehr möglich, durch den härteren Einsatzteil entlang dessen dem Aufsatzteil zugewandter Oberkante sowohl die Mittelschicht als auch die Verbindung zwischen Aufsatzteil und Einsatzteil durchzutrennen, sodaß beispielsweise nach einer gewissen Benutzungsdauer der Aufsatzteil mit der Mittelschicht entfernt und aufgrund des meist sehr hohen Verschmutzungsgrades durch die von oben her eindringenden Feuchtigkeiten und Flüssigkeiten durch einen neuen Aufsatzteil mit einer neuen Mittelschicht ersetzt werden kann und dadurch der höher feste Tragteil aufgrund der Verstärkung durch den Einsatzteil länger verwendet werden kann.

Vorteilhaft ist auch eine Ausgestaltung nach Patentanspruch 2, da dadurch eine höhere Tragfestigkeit des Sitzpolsters bei vertikalen, in Richtung des Traggestells gerichteten Druckbelastungen erreicht werden kann, ohne daß der Sitzpolster auseinanderbricht. Damit sind die Benutzer bei einem vertikalen Aufprall, beispielsweise bei einem Aufprall eines Flugzeuges auf einer Landebahn, vor Verletzungen durch vom Traggestell her eindringende Metallteile geschützt. Besonders vorteilhaft ist hierbei, daß bei geschlossenzelliger Ausbildung des Tragkörpers dieser bei der vertikalen Beanspruchung in sich zusammenbricht und in Art eines Dämpfungselementes eine Energievernichtung bewirkt, die dazu führt, daß die Beanspruchung auf den Körper eines Benutzers eines derartigen Sitzpolsters verringert wird und damit die Verletzungsgefahr zusätzlich herabgesetzt wird. Diese Dämpfungswirkung entsteht durch das bei der vertikalen Belastung erfolgende Zusammendrücken der Zellstruktur des geschlossenzelligen Einsatzteils und durch den daraus resultierenden Energieabbau. Damit ist es möglich, derartige Sitze auch bei den strengen Prüfungen, wie sie beispielsweise für Luftfahrzeuge vorgeschrieben sind, bei der Sitzpolster einer Belastung von 14 g widerstehen müssen, mit Vorteil einzusetzen.

Durch die weitere Ausgestaltung nach Patentanspruch 3 wird bei einer starken vertikalen Belastung, beispielsweise bei einem Aufprall erreicht, daß die Einsatzteile sich in vertikaler Richtung durch die zusammenbrechende Zellstruktur gleichmäßig verformen und damit eine gleichmäßige Verzögerung über die gesamte Sitzfläche erreicht wird, sodaß dadurch ein Herausfallen aus dem Sitz auch bei zusammenbrechender Zellstruktur der Einsatzteile ausgeschaltet ist.

Durch die Ausbildung nach Patentanspruch 4 wird weiters erreicht, daß die damit erzielte Festigkeitserhöhung das Wohlbefinden bzw. den Sitzkomfort nicht nachteilig verändert.

Eine andere Ausführungsvariante der Erfindung beschreibt Patentanspruch 5, wodurch eine hohe Steifigkeit bei langer Lebensdauer und geringem Gewicht des Einsatzteils erreicht wird, der gleichzeitig einen hohen Brandwiderstand aufweist.

Eine vorteilhafte Weiterbildung beschreibt Patentanspruch 6, weil dadurch das Gesamtgewicht des Sitzpolsters durch die Verringerung des Raumgewichtes in dem höherfesten Einsatzteil herabgesetzt wird. Damit können über die Benutzungsdauer des Sitzes Betriebskosten über die Gewichtsverringerung erzielt werden.

Möglich ist auch eine Ausbildung nach Patentanspruch 7, weil dadurch das Einsinken in den hoch belasteten Kantenbereich des Sitzpolsters verringert und damit eine ungewollte Neigung der Sitzfläche in Richtung der vorderen Kante des Sessels verhindert wird.

Eine vorteilhafte Weiterbildung beschreibt Patentanspruch 8, wodurch der Sitzkomfort für den Benutzer im Bereich der Gesäßbacken erhöht und durch den höherfesten Einsatzteil im Bereich der vorderen Stirnkante des Sitzpolsters ein Widerlager gegen das Abrutschen des Gesäßes in Richtung der vorderen Stirnkanten des Sitzpolsters sichergestellt wird.

Möglich ist auch eine Weiterbildung nach Patentanspruch 9. Dadurch wird ein hoher Sitzkomfort und eine gute Elastizität im Bereich der Sitzfläche einfach erreicht.

Weiters ist eine Ausbildung nach Patentanspruch 10 von Vorteil, da die Feuchtigkeitsaufnahme des Einsatzteils herabgesetzt und die Brandbelastbarkeit des Einsatzteils erhöht wird.

Eine vorteilhafte Weiterbildung beschreibt Patentanspruch 11, weil dadurch eine gute Abstützung und Halterung des Sitzpolsters auf seinem Traggestell, insbesondere bei Beanspruchungen von der Stirnkante in Richtung der Rücklehne sichergestellt ist, ohne daß dadurch die Stabilität des Sitzpolsters nachteilig verändert wird.

Möglich ist aber auch eine Ausbildung nach Patentanspruch 12, da durch die Anordnung dieser Abstützfläche ein gleitender Übergang zwischen dem Teil des Sitzpolsters mit geringerer Härte und dem Teil mit höherer Härte erreicht wird, ohne daß dieser Übergang für einen Benutzer als unangenehm empfunden wird.

Eine vorteilhafte Weiterbildung wird im Patentanspruch 13 beschrieben, da dadurch eine den anatomischen Gegebenheiten günstige Abstützung des Gesäßes des Benutzers am Einsatzteil erzielt wird.

Weiters ist auch eine Ausbildung nach Patentanspruch 14 vorteilhaft, wodurch in jeder Sitzstellung und seitlichen Neigung des Benutzers eines derartigen Sitzes der Aufbau eines dem abwärts rutschenden Benutzers entgegenstehenden Widerstandes gewährleistet ist.

Eine vorteilhafte Weiterbildung beschreibt Patentanspruch 15. Vorteilhaft ist hierbei, daß die Flexibilität des Einsatzteils in zur Sitzfläche vertikaler Richtung einfach eingestellt werden kann und trotzdem ein ausreichender Widerstand gegen das Herausrutschen aus dem Sitz aufgebaut werden kann.

Möglich ist aber auch eine Ausbildung nach Patentanspruch 16, wodurch die dem Einsatzteil vorgeordneten weicheren Bereiche des Aufsatzteils in zur Sitzfläche senkrechter Richtungsstärke nachgeben und daher der Walleffekt des Einsatzteils noch zusätzlich verstärkt wird.

Eine vorteilhafte Weiterbildung beschreibt Patentanspruch 17, da dadurch der sich gegen das Herausrutschen aus dem Sitz aufbauende Widerstand mit größer werdender Schräglage des Benutzers im Fahrzeugsitz immer höher wird, ohne daß er vom Benutzer als unangenehm empfunden wird.

Möglich ist auch eine Ausbildung nach Patentanspruch 18, wodurch ein derartiger Sitzpolster auch die sehr schwierigen Sicherheitsprüfungen und Brandtests für einen Flugzeugsitz bestehen kann, da der Gewichtsverlust des Sitzpolsters während des Brandtestes gering gehalten werden kann.

Vorteilhaft ist auch eine Weiterbildung nach Patentanspruch 19, weil dadurch für den Tragteil eine Festigkeit erreicht wird, durch welche eine länger dauernde Verwendung möglich ist.

Von Vorteil ist aber auch eine Ausbildung nach Patentanspruch 20, wodurch unterschiedliche Federungswiderstände über den Querschnitt des Federkerns einfach ausgeglichen werden können und Scheuerstellen zwischen dem Federkern und benachbarten Metallteilen verhindert werden können.

Es ist aber auch eine Weiterbildung nach Patentanspruch 21 vorteilhaft. Dadurch können Überbeanspruchungen und Zerstörungen des Tragkörpers zwischen dem Federkern und den Auflageschichten verhindert werden.

Weiters ist aber auch eine Ausbildung nach Patentanspruch 22 möglich. Eine derartige Ausbildung verhindert, daß bei Entstehen eines Feuers zuviel Bezugsstoff verbraucht wird.

Es ist auch eine Ausgestaltung nach Patentanspruch 23 möglich, sodaß ein behagliches Sitzklima am Sitzpolster erreicht wird.

Vorteilhaft ist auch eine weitere Ausführungsform nach Patentanspruch 24, da dadurch der Widerstand gegen Zerreißen erhöht und die bei Einwirkung der Kraft bewirkte Dehnung des Gesamtverbundes aus der Faserlage und der Trägerlage an unterschiedliche Dehnungseigenschaften angepaßt werden kann. Darüber hinaus wird durch eine Festlegung des Gewichtes der Trägerlage von 15 bis 90 g/m² ein guter Mittelwert zwischen dem Gewicht und der mechanischen Belastbarkeit der Trägerlage erreicht.

Vorteilhaft ist weiters eine Ausbildung nach Patentanspruch 25, da durch die Zusammensetzung und die Ausbildung als Gewebe bzw. Gewirke die Trägerlage sehr rasch an unterschiedliche Festigkeit und Widerstandsbedingungen, wie beispielsweise einen entsprechend hohen Flammschutz angepaßt werden kann.

Durch die Ausbildung nach Patentanspruch 26 ist es möglich, bei Flammeinwirkung auf den Sitz die Brandbelastung auf den darunter angeordneten Stützkörper bedingt durch die Netzstrukturen zu verringern, wobei aufgrund der Dicke der Netzfäden bzw. Fasern ein entsprechender Abbrandwiderstand bzw. eine vorgeschriebene Dauer der Flammeneinwirkung erzielt werden kann, ohne daß das Netz bzw. Gitter durchbrennt.

Bei einer bevorzugten Ausführungsvariante gemäß Patentanspruch 27 wird durch die Stärke der Fasern bzw. Fäden eine widerstandsfähige Trägerlage erreicht, die aber eine noch ausreichende Flexibilität und Dehnbarkeit aufweist, sodaß das Sitzgefühl und der Komfort nicht leiden.

Nach einer anderen Ausführungsvariante gemäß Patentanspruch 28 wird durch die entsprechende Maschendichte sichergestellt, daß der Brand bei Flammeinwirkung auf das Vlies bzw. dessen Trägerlage so bemessen ist, daß der Kunststoffschaum des Stützkörpers sich nicht entzünden kann bzw. die entstehenden Einbrände vom Volumen her gering gehalten werden. Dadurch wird erreicht, daß die Rauchbelastung beim Verschmoren der Kunststoffe geringer ist und die entsprechenden Vorschriften zur Herstellung der Sitze, insbesondere für Flugzeuge, eingehalten werden können.

Durch die Ausbildung nach Patentanspruch 29 wird erreicht, daß die Trägerlage in einer ihrer Hauptrichtungen, beispielsweise in der Breite, eine höhere Dehnung aufweist, wodurch in Längsrichtung eine hohe Zugkraft aufgenommen werden kann und gleichzeitig durch die höhere Dehnung in der dazu quer verlaufenden Richtung trotzdem noch ein ausreichender Sitzkomfort erhalten bleibt.

Durch die weitere Ausführung nach Patentanspruch 30 wird eine kostengünstige Herstellung der Trägerlage erreicht, die auch eine ausreichende Dichte und Engmaschigkeit aufweist, sodaß das Aufziehen des Bezugsstoffes nicht behindert wird und gleichzeitig eine strapazfähige Oberfläche bei entferntem Bezugsstoff geschaffen wird, sodaß eine lange Lebensdauer des Sitzpolsters auch bei oftmaligem Wechsel des Bezugsstoffes, wie dies insbesondere bei Fahrgastsitzen für die unterschiedlichsten Fahrzeuge, insbesondere für Flugzeuge, notwendig ist, erzielt wird.

Vorteilhaft ist auch eine Weiterbildung nach Patentanspruch 31, da die Dehnungen der Trägerlage ausreichen, um ein angenehmes Sitzgefühl zu erzeugen, andererseits aber eine Überbelastung des darunter angeordneten Stützkörpers durch eng begrenzte Überbelastungen sicher vermieden ist.

Bei der Ausgestaltung nach Patentanspruch 32 ist von Vorteil, daß aufgrund der hohen Höchstzugkraft, wie sie beispielsweise beim Knien auf Polstern bzw. beim Abstellen von schweren Koffern entstehen können, nicht durchreißt.

Durch die Weiterbildung nach Patentanspruch 33 wird erreicht, daß mittels der Trägerlage der Polster auch am Traggestell oder dgl. bei hohen Gehbelastungen befestigt werden kann, ohne daß zusätzliche Befestigungsmittel vorgesehen werden müssen, wodurch insbesonders Gewicht bei derartigen Sitzen eingespart werden kann.

Durch die Ausbildung der Faserlage nach Patentanspruch 34 kann eine einfache Anpassung an die klimatischen Bedingungen des daraus hergestellten Vlieses vorgenommen werden.

Vorteilhaft ist auch eine Ausbildung der Faserlage nach Patentanspruch 35, da dadurch durch das Vlies selbst eine Brandhemmung bzw. Flammhemmung in einfacher Weise erreicht werden kann.

Werden dagegen Kunststoffasern bzw. Fäden gemäß Patentanspruch 36 verwendet, so besteht die einfache Möglichkeit, das Vlies durch Druckbelastung unter gleichzeitiger Wärmezufuhr thermisch zu binden und zu verfestigen.

Dabei erweist sich eine Ausgestaltung nach Patentanspruch 37 vorteilhaft, da mit relativ niederen Temperaturen das Grundgefüge der Fasern bzw. Fäden noch nicht verändert, eine thermische Verdichtung bzw. im erhitzten Zustand ein Anhaften der Fäden erreicht werden kann, wobei bei Beibehaltung der unter Druck erzielten Formgebung bis zum Abkühlen der Fasern bzw. Fäden unter den Einfrierpunkt die unter Druck hergestellte Form auch im erkalteten Zustand beibehalten werden kann.

Eine hohe Ausreißfestigkeit und Belastbarkeit des Vlieses bzw. der Faserlage wird durch die Ausgestaltung der Fasern bzw. Fäden nach den Patentansprüchen 38 bis 39 erreicht.

Günstig ist hier weiters eine Ausführung nach Patentanspruch 40, da die thermische Verdichtung auch eine Versteifung der Fasern und Fäden und damit eine höhe Auszugsfestigkeit bewirkt.

Das Raumgewicht einer erfindungsgemäßen Mittelschichte kann durch die Weiterbildung nach Patentanspruch 41 gering gehalten werden, da eine zusätzliche Kleberschichte zum Verbinden der Zwischenschichte mit den Fasern bzw. Fäden der Faserlage des Vlieses eingespart werden kann.

Von Vorteil ist auch eine Ausführungsvariante nach Patentanspruch 42, da in Verbindung mit den Trägerlagen einem Eindringen von Flammen ein sehr hoher und dauerhafter Widerstand entgegengesetzt wird.

Weitere Vorteile ergeben sich durch Weiterbildungen gemäß den Patentansprüchen 43 bis 45.

Zum besseren Verständnis der Erfindung wird diese im nachfolgenden anhand der in den Zeichnungen gezeigten Ausführungsbeispiele näher erläutert.

Es zeigen:
- Fig. 1: eine Doppelsitzbank mit erfindungsgemäßen Sitzpolstern und mit Rückenlehnen in schaubildlicher Darstellung;
- Fig. 2: einen erfindungsgemäßen Sitzpolster, bestehend aus Aufsatzteil, Tragteil und Einsatzteil in Seitenansicht, geschnitten, gemäß den Linien II-II in Fig.3;
- Fig. 3: den erfindungsgemäßen Sitzpolster in Stirnansicht, geschnitten, gemäß den Linien III-III in Fig.2;
- Fig. 4: den Sitzpolster nach den Fig. 2 und 3 in Draufsicht, teilweise geschnitten;
- Fig. 5: eine andere Ausführungsvariante des Sitzpolsters in Seitenansicht, geschnitten;
- Fig. 6: den Sitzpolster nach Fig. 5 in Stirnansicht und abgehobener Schutzschichte;
- Fig. 7: eine andere Ausführungsform eines Sitzpolsters mit einem weiteren Einsatzteil in Seitenansicht, geschnitten.

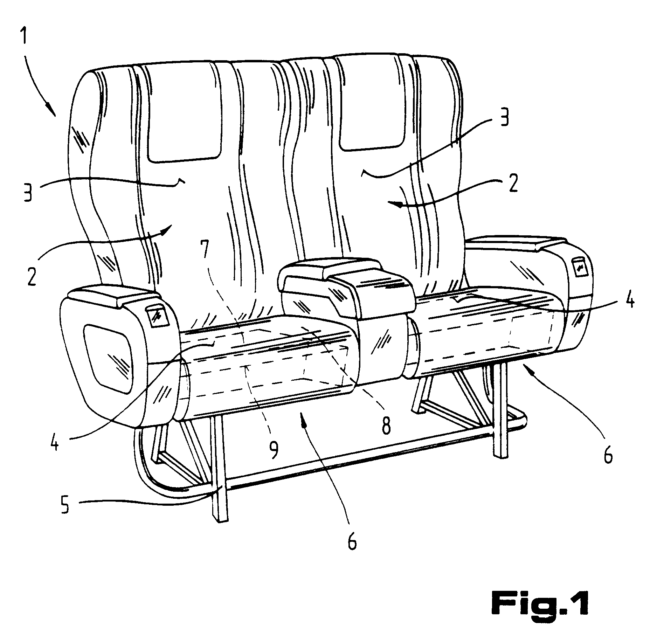

In Fig.1 ist eine Doppelsitzbank 1 mit zwei Sitzen 2 dargestellt, jeder der Sitze 2 besteht aus einer Rückenlehne 3 und einem Sitzpolster 4. Die Sitzpolster 4 der Sitze 2 sind identisch aufgebaut. Die Rückenlehne 3 und der Sitzpolster 4 werden in ein Traggestell 5 eingelegt. Das Traggestell 5 kann auch jede beliebige andere Form aufweisen.

Wie schematisch angedeutet ist, weist der Sitzpolster 4 einen Stützkörper 6 auf der aus einem Tragteil 7 und einem Aufsatzteil 8 sowie einem Einsatzteil 9 gebildet ist. Der Aufsatzteil 8 überdeckt in seiner Tiefenerstreckung sowohl den Tragteil 7 als auch den Einsatzteil 9.

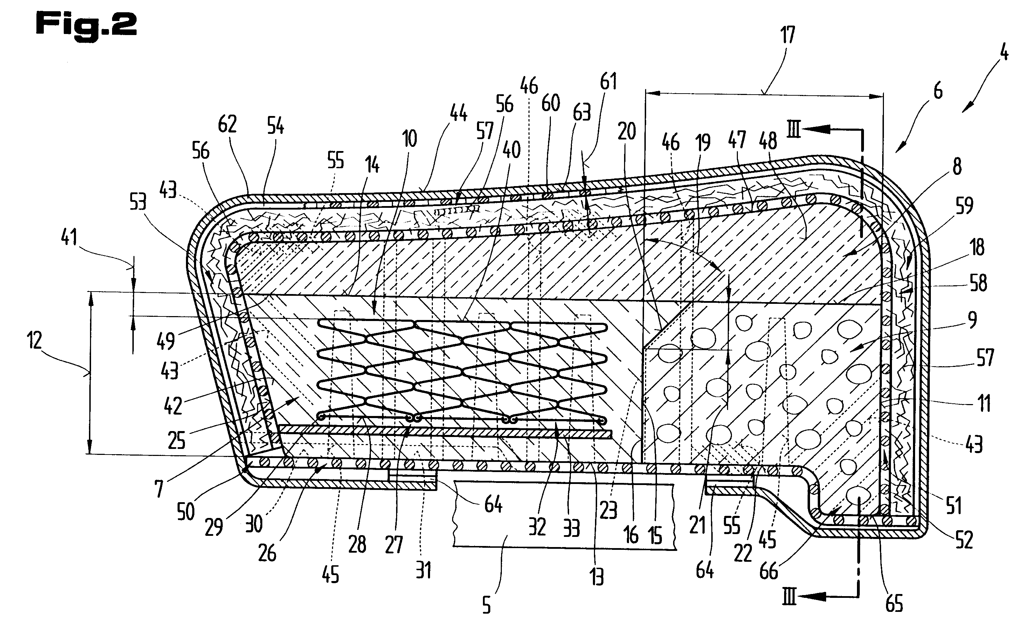

In den Fig. 2 bis 4 ist die Ausbildung des erfindungsgemäßen Sitzpolsters 4 näher gezeigt.

Wie aus diesen Darstellungen näher ersichtlich, ist in dem Tragteil 7 ein Federkern 10 eingebettet. Dieser liegt in einer hinteren, von einer Stirnkante 11 abgewendeten Hälfte des Sitzpolsters 4 und erstreckt sich nahezu über eine volle Dicke 12 des Tragteils 7, also von einer Unterseite 13 zu einer Oberseite 14. Im Anschluß an eine Stirnfläche 15 des Tragteils 7 erstreckt sich der Einsatzteil 9 mit seiner Verbindungsfläche 16 in Richtung der Stirnkante 11 des Sitzpolsters 4. Dabei weist der Einsatzteil 9 eine Tiefe 17, die z.B. bei einer Tiefe zwischen 40 cm und 60 cm des Sitzpolsters 4 zwischen 30 mm und 200 mm betragen kann, zwischen der Stirnkante 11 und der Stirnfläche 15 auf. Sehr wichtig ist, daß sich die Verbindungsfläche 16 des Einsatzteils 9 nicht über die gesamte Dicke 12 erstreckt, sondern im Bereich einer Oberseite 18 mit einer, um einen Winkel 19 in Richtung der Stirnkante 11 geneigten Abstützfläche 20, versehen ist. Die Abstützfläche 20 erstreckt sich in einer Distanz 21 von der Oberseite 18 in Richtung einer Unterseite 22 des Einsatzteils 9. Die Verbindung zwischen der Verbindungsfläche 16 bzw. der Abstützfläche 20 des Einsatzteils 9 mit der Stirnfläche 15 des Tragteils 7 kann z.B. einerseits dadurch erfolgen, daß der Tragteil 7 in einem Schäumvorgang an den Einsatzteil 9 angeschäumt wird, oder andererseits, wie mit strichlierten Linien angedeutet, über eine eigene Verbindungsschichte 23 erfolgen. Die Verbindungsschichte 23 kann z.B. aus Schmelzklebefolien, auf Wärme reagierende Schmelzpulver etc. gebildet sein.

Die Unterseiten 13 und 22 mit Ausnahme von Seitenkanten 24, einer hinteren Stirnkante 25 und der Oberseite 14 sind mit einer Schutzschichte 26 umhüllt, welche bereichsweise durch voneinander distanzierte Klebestellen mit dem Tragteil 7 bzw. Einsatzteil 9 verbunden ist.

Der Einsatzteil 9 besteht aus einem Polyäthylenschaum mit einem Raumgewicht zwischen 15 und 50 kg/m³, bevorzugt 25 kg/m³, bei einer Härte zwischen 30 und 100 kPa bei 40 % Eindrucktiefe. Der Einsatzteil 9, welcher bevorzugt aus einem Polyäthylenschaum besteht, weist dabei eine bevorzugt geschlossenzellige Kunststoffstruktur auf.

Weiters ist in Fig. 2 eine bevorzugte Weiterbildung, welche nicht zwingend ist, zu ersehen, bei welcher Knotenpunkte 27 von Längs- bzw. Querdrähten 28, 29 im Bereich von Nuten 30 in der Unterseite 13 des Tragteils 7 angeordnet sind. Damit überragen die zwischen den Nuten 30 liegenden Vorsprünge 31 eine untere Auflagefläche 32 des Federkerns 10, sodaß es beim Aufliegen des Sitzpolsters 4 auf dem ebenflächigen Traggestell 5 nicht zu einer vorzeitigen Zerstörung der Schutzschichte 26 durch die Knotenpunkte 27 kommen kann bzw. in diesen Bereichen eine längere Lebensdauer der Schutzschichte 26 erreicht wird.

Zusätzlich ist es im übrigen auch weiters möglich, dies ist aber nicht zwingend, beispielsweise zumindest zwischen der Auflagefläche 32 des Federkerns 10 und der Unterseite 13 bzw. der auf dieser angeordneten Schutzschichte 26 eine Zwischenschichte 33 aus hochfesten Fasern bzw. Fäden in Art eines Gewirkes, Netzes, Gitters oder dgl. anzuordnen, die aus Metall, Kohle, Kunststoff, Keramik oder dgl. bestehen und zusätzlich oder gleichzeitig auch hochtemperaturfest sein können. Diese Zwischenschichte 33 kann sich aber des weiteren auch, wenn dies gewünscht ist, über die Stirnkante 11, die Seitenkanten 24 und die hintere Stirnkante 25, also über die gesamte Oberfläche mit Ausnahme der Oberseite 14 erstrecken.

Der Tragteil 7 kann aus Kunststoffschaum einstückig hergestellt sein. Es ist möglich, diesen Kunststoffschaum auch offenzellig zu gestalten, und er kann überdies unterschiedliche Elastizitätswerte - in Anpassung an den jeweiligen Einsatzfall - aufweisen. Das Raumgewicht des Tragteils beträgt zwischen 15 kg/m³ und 30 kg/m³, bevorzugt 25 kg/m³ bei einer Härte zwischen 350 N und 550 N, bevorzugt 400 N.

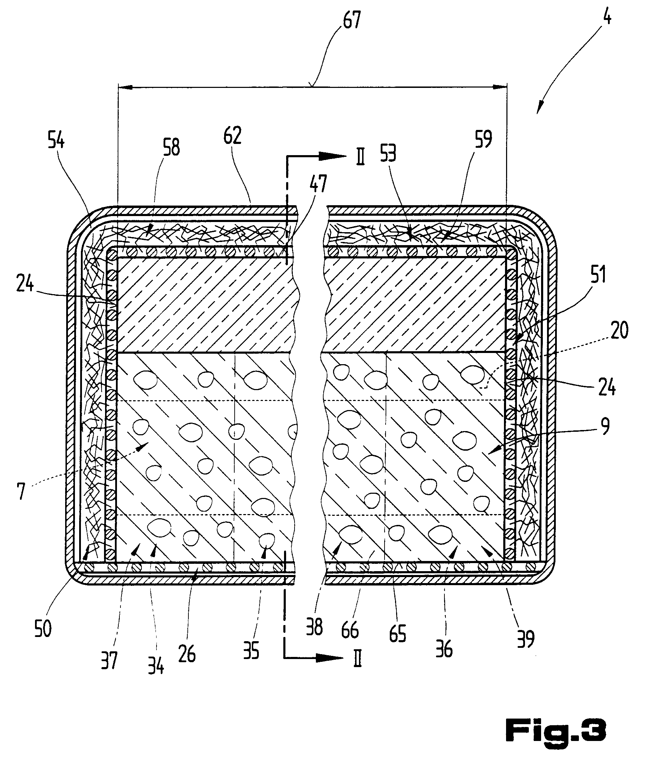

Selbstverständlich ist es in Abwandlung dieser Ausbildung aber auch möglich, den Tragteil, wie mit strichpunktierten Linien in Fig. 3 schematisch dargestellt, auch aus mehreren Lagen 34, 35, 36 verschiedener Schaumkunststoffe 37, 38, 39 zusammenzusetzen.

Besonders bevorzugt ist jedoch eine Ausbildung, bei der der Federkern 10 in den Tragteil 7 eingeschäumt bzw. eingeformt ist. Dabei ist es möglich den Federkern 10 in der Schäumform für den Tragteil 7 vorzuspannen, d.h. entsprechend den Festigkeitseigenschaften von Federn eine höhere Federkraft vorzugeben bzw. ein entsprechendes Federverhalten bei Verwendung einer geringeren Drahtdicke der Federn zu erreichen. Dadurch ist es aber auch möglich, das Gewicht des Federkerns 10 und so des Tragteils 7 gering zu halten. So weist eine Oberseite 40 des vorgespannten Federkerns 10 einen Abstand 41 von der Oberseite 14 des Tragteils 7 auf. Dieser beträgt bevorzugt zwischen 5 mm und 70 mm.

Der Tragteil 7 besteht bevorzugt aus einem Formkaltschaum, welcher in einer den gewünschten äußeren Abmessungen entsprechenden Form hergestellt wird. Er besteht üblicherweise aus einem elastischen offenzelligen Kunststoffschaum 42, z.B. Polymethanschaum. Bevorzugt ist er einteilig ausgebildet. Der Kunststoffschaum 42 kann, wie schematisch durch kleine Striche im Bereich der Schraffur angedeutet, mit einem pulverförmigen Flammschutzmittel 43, z.B. mit Melaminharz und/oder Aluminiumhydroxyd versetzt sein. Diese Flammschutzmittel können aber auch selbstverständlich dem Einsatzteil 9 bzw. dem Aufsatzteil 8 beigefügt werden, wie dies schematisch bereichsweise angedeutet ist.

Des weiteren können zur besseren Durchlüftung des Tragteils 7 bzw. zur Wärme-und Feuchtigkeitsabfuhr aus dem Bereich einer Sitzfläche 44 Ausnehmungen 45 bzw. Kavernen vorgesehen sein, die sich von der der Sitzfläche 44 gegenüberliegenden Unterseite 13 bis nahe an die Oberseite 14 des Tragteils 7 erstrecken. Es ist aber auch möglich, Durchbrüche 46 von der Unterseite 13 des Tragteils 7 bis in den Bereich einer Oberseite 47 des Aufsatzteils 8 anzuordnen. Diese Anordnung von Ausnehmungen 45 bzw. Durchbrüchen 46 kann auch, falls dies gewünscht ist, im Einsatzteil 9 zu einer Verbesserung des Sitzklimas oder zu einer weiteren Gewichtsreduktion führen.

Der Aufsatzteil 8 wird aus einem von der Stirnkante 11 in Richtung der Stirnkante 25 bevorzugt verjüngend verlaufenden Schaumkunststoff 48, in vorteilhafter Weise aber nicht zwingend mit einem zum Tragteil 7 geringeren Raumgewicht gebildet. Die Härte des Aufsatzteils 8 beträgt zwischen 120 N und 300 N, bevorzugt 180 N bei einem Raumgewicht zwischen 35 kg/m³ und 55 kg/m,³. Der Aufsatzteil 8 ist an der Oberseite 47 und in Richtung des Tragteils 7 bzw. Einsatzteils 9 eine Auflagefläche 49 des Aufsatzteils 8 überragend mit einem Schichtaufbau 50 umhüllt.

Bedingt durch die größere Härte des Einsatzteils 9 gegenüber dem Tragteil 7 bildet sich eine höherfeste Widerstandszone aus, welche sich in Richtung der Dicke des Sitzpolsters weniger zusammendrücken läßt, als die den Einsatzteil umgebenden Bereiche. Dadurch wirkt der Einsatzteil aufgrund seines höheren Verformungswiderstandes bei Druckbelastungen in Art einer Barriere bzw. Schwelle, welcher im Zusammenwirken mit der geneigten Abstützfläche 20 dem Benutzer des Fahrzeugsitzes das Gefühl vermittelt, nicht aus dem Sitz herauszurutschen. Somit wird eine gewisse Schwellenwirkung bzw. ein Haltewiderstand aufgebaut, welche dem Benutzer auch bei schlechtem Sitzen bzw. in einer Sitzstellung, bei welcher sich das Gesäß im vorderen Randbereich des Fahrzeugsitzes befindet, das Gefühl vermittelt wird, trotz einer ruhigen und entspannten Sitzposition genügend Gegenhalt aufzubauen.

Die gezielte Verstärkung im Bereich der Stirnseite des Fahrzeugsitzes wird durch die elastischen Eigenschaften des weicheren Aufsatzteils 8 bzw. des Schichtaufbaus 50 in Bezug auf den Sitzkomfort verbessert. Somit wird im Sitzbereich der Sitzkomfort verbessert und die Tragfähigkeit sowie Lebensdauer des Sitzpolsters erhöht. Weiters wird damit auch die Lebensdauer und die Federungseigenschaft des Aufsatzteils verbessert, da dieser vor Überbeanspruchungen im Bereich der vorderen Stirnkante des Sitzpolsters 4 durch übermäßiges Zusammendrücken in Dickenrichtung gegenüber dem Traggestell geschützt ist. Weiters ist es möglich, den weicheren Aufsatzteil 8 im Verbindungsbereich zum Einsatzteil 9 sowie Tragteil 7 zu durchtrennen, sodaß beispielsweise nach einer gewissen Benutzungsdauer der Aufsatzteil 8 mitsamt dem Schichtaufbau 50 entfernt werden kann, da dieser Bereich des Sitzpolsters 4 meist einen sehr hohen Verschmutzungsgrad durch von oben her eindringende Feuchtigkeiten bzw. Flüssigkeiten aufweist. Der am Tragteil 7 bzw. Einsatzteil 9 verbleibende Schichtaufbau wird anschließend auch entfernt, und es muß lediglich ein neuer bzw. gereinigter Aufsatzteil 8 mit einem neuen Schichtaufbau 50 am Tragteil 7 bzw. Einsatzteil 9 aufgebracht werden. Dies erspart hohe Kosten in Bezug auf die Reinigung bzw. den Ersatz von Teilen des Sitzpolsters 4, da nur ein geringer Anteil am Volumen des gesamten Sitzpolsters ausgetauscht bzw. gereinigt werden muß.

Der Schichtaufbau 50 besteht aus einer Zwischenschichte 51, beispielsweise einem Gewebe oder Gewirke, Netz oder Gitter aus hochtemperaturfesten Fasern bzw. Fäden 52 aus Glas bzw. Kunststoff und/oder Metall und/oder Keramik und/oder Graphit, einer Mittelschichte 53, sowie einer Trägerlage 54. Diese mittels Kleber 55 in über die Oberseite 47 verteilten Bereichen mit dem Tragteil 7 verbundene Zwischenschichte 51 ist über den Kleber 55 gleichzeitig auch mit der Mittelschichte 53 kraft- und formschlüssig verbunden. Der Kleber 55 dringt dabei in die aus Fasern bzw. Fäden 56, 57 bestehende Faserlage 58 eines Vlieses 59 ein und schafft somit einen intensiven kraftschlüssigen Verbund zwischen dem Tragteil 7 und der Faserlage 58. Dabei ist es selbstverständlich auch möglich, daß die Zwischenschichte 51 durch Vernadelung mit den Fasern bzw. Fäden 56, 57 der Faserlage 58 verbunden ist. Die Zwischenschichte 51 weist eine Maschenweite zwischen 0,5 mm und 8,0 mm, bevorzugt 3 mm, bei einem Flächengewicht zwischen 80 g/m² und 185 g/m², bevorzugt 120 g/m², auf.

Die Fäden 57 können erfindungsgemäß auch aus einer Mehrzahl von Fasern 56, wie dies schematisch bei einem der Fäden 57 in Fig. 2 gezeigt ist, hergestellt sein. Bevorzugt können diese Fäden 57 aus Filamenten zusammengesetzt sein, wodurch sie hohe Widerstandswerte und eine entsprechend hohe Oberflächenrauhigkeit zum guten Verbinden bei einem Verwirken bzw. Vernadeln aufweisen, jedoch biegeschlaff bzw. biegeweich sind und daher nur geringe Rückfederungskräfte auftreten. Dadurch wird ein elastischer Gesamtkörper mit einem in etwa einheitlichen Verformungsverhalten erreicht, der eine hohe Anschmiegsamkeit aufweist.

Die Fasern bzw. Fäden 56, 57 der Faserlage 58 können vorwiegend aus Naturmaterial, z.B. Wolle oder Baumwolle, bestehen. Andererseits ist es aber auch möglich, ausschließlich Fasern bzw. Fäden 56, 57 aus Kunststoff zu verwenden oder die Fasern bzw. Fäden 56, 57 aus Kunststoff und Naturmaterialien beliebig zu mischen. Bestehen die Fasern und Fäden aus Naturmaterialien, so können sie aus Baumwolle, Schafwolle, Flachs oder dgl. gebildet sein, wogegen die Fasern bzw. Fäden 56, 57 aus Kunststoff aus Polypropylen und/oder Polyäthylen und/oder Polyacrylat, aber beispielsweise auch aus Polybenzimidazol und/oder Aramiden bestehen, die einen Anteil zwischen 5 % und 20 %, bevorzugt 10 % ausmachen.

Je höher der Anteil an Fasern bzw. Fäden 56, 57 aus Aramiden oder Filamenten bzw. Polybenzimidazol ist, umso höher wird die Schmelztemperatur der mit derartigen Fasern bzw. Fäden 56, 57 versetzten Faserlagen 58. Dies deshalb, da die Fasern bzw. Fäden 56, 57 aus Aramiden bzw. Polybenzimidazolen eine Schmelztemperatur von über 1000°C aufweisen.

Ist vorgesehen, daß die Fasern bzw. Fäden 56, 57 der Faserlage beispielsweise durch thermische Crackung bzw. thermische Bindung verfestigt werden sollen, so ist es von Vorteil, wenn diese Fasern bzw. Fäden 56, 57 aus Thermoplasten bestehen. Vor allem Thermoplaste weisen am ehesten einen Plastifizierungs- bzw. Erweichungspunkt zwischen 100 und 150°C, bevorzugt zwischen 100 und 120°C, auf, die eine thermische Verbindung der Fasern bzw. Fäden 56, 57 oder eine thermische Verfestigung des Vlieses 59 begünstigt.

Selbstverständlich ist es aber auch möglich, Fasern bzw. Fäden 56, 57 für die Faserlage 58 zu verwenden, die aus Polyamiden hergestellt sind. Für die Fasern bzw. Fäden 56, 57 der Faserlage 58 empfiehlt es sich weiters, vor allem wenn diese aus Polypropylen oder Aramid oder Polyamid bestehen, daß sie einen Titer, also ein Gewichts/Längenverhältnis von 2 bis 8 dtex, bevorzugt 3,5 dtex, aufweisen. Nachdem die Faserlage 58 dadurch hergestellt wird, daß die einzelnen Fasern bzw. Fäden 56, 57 nur durch Nadeln bzw. Verfilzen und in einigen bestimmten Fällen durch thermische Bindung, also durch gleichzeitige Einwirkung von Druck und Temperatur aneinander haften bzw. in der das Vlies 59 bildenden lockeren Matte halten, ist es um eine hohe Zug-und Reißfestigkeit, vor allem bei geringem Raumgewicht eines derartigen Vlieses zu erreichen auch wichtig, die richtige Länge der Fasern bzw. Fäden 56, 57 für die Herstellung der Faserlage 58 zu verwenden. Dabei hat sich vor allem eine Länge von 40 bis 80 mm als vorteilhaft erwiesen.

Es ist dabei zu berücksichtigen, daß bei der Herstellung dieses Vlieses, die Fasern bzw. Fäden 56, 57 z.B. aus Baumwolle, Schafwolle, Flachs oder aus Polyamid, Polyester, PVC, PP, PE oder Nylon bzw. Aramiden und dgl. als loses Schüttgut, beispielsweise auf eine als Transportband dienende Trägerlage 54 aufgebracht werden. Während der Vorwärtsbewegung des Schüttgutes auf dieser Trägerlage wird diese Wirrlage aus Fasern bzw. Fäden 56, 57 mittels meist hakenförmiger Nadeln vernadelt bzw. verfilzt, um so einen zusammenhängenden in sich verbundenen Körper zu bilden. Diese Verbindung ist unabhängig davon, ob die Trägerlage mit der Faserlage über die Fasern und Fäden 56, 57 verbunden wird oder ob das Trägerband ein endlos umlaufender Maschinenteil ist.

Bei einer derartigen vorbeschriebenen Vorgangsweise ist es dann möglich, Raumgewichte der Faserlage des Vlieses zwischen 10 und 80 kg/m³ zu verwenden, die eine ausreichende Widerstandsfestigkeit für den bei Sitzen auftretenden Beanspruchungsbereich aufweisen. Dadurch kann ein Quadratmetergewicht der Faserlage 58 des Vlieses 59 bei einer Dicke von ca. 5 mm zwischen 60 und 390 g/m², bevorzugt 70 g/m² aufweisen.

Reichen die Festigkeiten eines derart hergestellten Vlieses 59 nicht, ist es möglich, bei Verwendung von Fasern bzw. Fäden 56, 57 aus Kunststoff dieses Vlies durch nachfolgende thermische Verdichtung auf ein Flächengewicht zwischen 300 und 500 g/m² bei einer Dicke von z.B. 5 mm auszubilden.

Ein weiterer Vorteil der Herstellung eines derartigen Vlieses ist neben dem geringen Raumgewicht bzw. Flächengewicht, vor allem beim Einsatz in Fahrzeugen und Flugzeugen, daß es ohne zusätzliche Schichten und damit ohne Zusatzgewicht mit einer zur Verstärkung derselben, insbesondere in den Oberflächenbereichen angeordneten Trägerlage 54 verbunden werden kann.

Diese Faserlage 58 ist weiters durch Vernadelung bzw. auch durch thermische Klebeverbindung als Vlies 59 ausgebildet und gleichzeitig mit der Trägerlage 54 bewegungsverbunden, die ebenfalls beispielsweise aus einem Netz oder Gitter bzw. Gewirke, Gestricke oder dgl. aus Kunststoff beispielsweise Polyamid oder Polyester besteht. Hierzu weist sie Fäden 60 auf, die aus z.B. 100 % Polyester bzw. 100 % Polyamid gebildet sind und einen Durchmesser 61 bzw. einen dtex 22/1 oder 44F10 aufweisen. Eine derartig ausgebildete Trägerlage 54 weist dazu 80 bis 180, bevorzugt 130 bis 140 Maschenreihen/dm Länge bzw. 40 bis 140, bevorzugt 60 bis 120 Maschenstäbchen/dm Länge auf, welche aus dreimal 400 bis 1500, bevorzugt 580 bis 1160 Fäden pro Flächeneinheit besteht.

Ein derartiges Netz, welches die Trägerlage 54 bilden kann, kann z.B. ein Gewicht zwischen 15 bis 90 g/m², bevorzugt 35 g/m², aufweisen.

Als bevorzugt hat sich erwiesen, wenn dieses Netz eine Maschinendichte von 12 Öffnungen/dm aufweist. Des weiteren soll die Trägerlage einer Zugkraft von ca. 200 bis 500 N widerstehen und die Reißfestigkeit der Trägerlage zwischen 240 und 500 N/cm betragen.

Die Fasern bzw. Fäden der Trägerlage 54 können auch aus Filamenten gebildet sein, wobei es auch möglich ist, daß zumindest einzelne Filamente aus präoxidiertem Polyacrylat, Aramid bzw. Polybenzimidazol und/oder Naturmaterialien bestehen können.

Für die bevorzugte Anwendung der Trägerlage im Bereich von Sitzen, insbesondere von Flugzeugen empfiehlt sich eine Längs- und Querdehnung zwischen 30 und 50 %, bevorzugt zwischen 34 und 44 %.

In diesen Zusammenhang ist es auch vorteilhaft, wenn die Trägerlage 54, biegeweich bzw. biegeschlaff ist und einen möglichst geringen Rückfederungswert aufweist. Dies verhindert, daß die Trägerlage 54, die das erfindungsgemäße Vlies 59 verstärkt, den Sitzkomfort beeinträchtigt bzw. in Knickbereich zwischen horizontalen und senkrechten Flächen des Sitzpolsters 4 der Doppelsitzbank 1 einen Bezugsstoff 62 aufscheuert bzw. zerstört.

Auf dieser eine Oberfläche 63 des Vlieses 59 bildenden Trägerlage 54 liegt dann der die Sitzfläche 44 bildende Bezugsstoff 62 auf, der in vielen Fällen nur den aus Tragteil 7, Zwischenschichte 51, Mittelschichte 53 und Trägerlage 54 bestehenden Schichtaufbau 50 umhüllt und mittels Klettbändern 64 auf dem Tragteil 7 bzw. Einsatzteil 9 befestigt ist.

Der Schichtaufbau 50 reicht dabei, wie dies am besten aus Fig. 2 zu ersehen ist, im Bereich der hinteren Stirnkante 25 bis an die Unterseite 13 des Tragteils 7 und wird an seiner Stirnkante noch von der Schutzschichte 26 überdeckt. Im Bereich der vorderen Stirnkante 11 des Sitzpolsters 4 reicht eine Stirnkante des Schichtaufbaus 50 bis in die Höhe einer Stirnfläche 65, welche von einem von der Oberseite 18 abgewendeten Bereich über die Unterseite 22 des Einsatzteils 9 vorspringenden Schenkel 66 gebildet wird. Die Schutzschichte 26 reicht also wie bereits zuvor beschrieben, von der hinteren Stirnkante 25 die Unterseiten 13 bzw. 22 und den Schenkel 66 überdeckend bis in den Bereich der Oberfläche 63 der Trägerlage 54.

Die Befestigung des Bezugsstoffes 62 auf dem Sitzpolster 4 ist aus den verschiedenen Anwendungsfällen bzw. einer Mehrzahl von vorveröffentlichten Druckschriften entnehmbar, weshalb auf diese Details hier nicht näher eingegangen wird.

Wie nun besser aus der Fig. 3 zu ersehen ist, weist der Einsatzteil 9 eine gleiche Breite 67, wie der Aufsatzteil 8 bzw. Tragteil 7 auf. Somit weist der Sitzpolster 4 ebenflächige Seitenkanten 24 auf, welche ausgehend von der Stirnfläche 65 des Schenkels 66 und die Oberseite 47 des Aufsatzteils 8 übergreifend von der Zwischenschichte 51 des Schichtaufbaus 50 umhüllt ist.

Die Verbindung zwischen dem Aufsatzteil 8 sowie dem Tragteil 7 und dem Einsatzteil 9 kann durch jede aus dem Stand der Technik bekannte Verbindung zwischen Schaumkunststoffen erfolgen. So ist es z.B. möglich, den Aufsatzteil 8 mit seiner Auflagefläche 49 direkt auf die Oberseiten 14 bzw. 18 des Tragteils 7 bzw. Einsatzteils 9 aufzuschäumen. Es ist aber auch selbstverständlich möglich, eine Verbindung zu wählen, wie dies bereits anhand der Verbindung zwischen dem Tragteil 7 mit seiner Stirnfläche 15 und dem Einsatzteil 9 mit seiner Verbindungsfläche 16 beschrieben worden ist. Weiters ist es auch möglich, als Verbindungsvorrichtung diverse Klettbänder oder andershaftende Materialien zu verwenden.

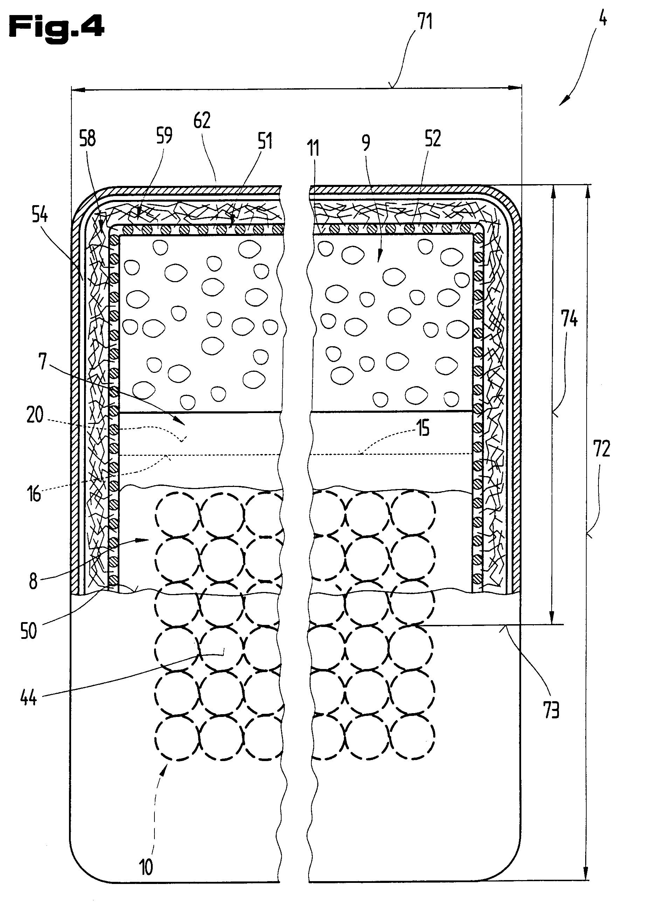

Die Fig. 4 zeigt eine Draufsicht auf den Sitzpolster 4 bei teilweise abgehobenem Schichtaufbau 50. Dieser besteht, wie bereits zuvor beschrieben, aus der Zwischenschichte 51, der Faserlage 58 des Vlieses 59 sowie der Trägerlage 54. Dieser Schichtaufbau 50 wird allseitig vom Bezugsstoff 62 umgeben.

Im Anschluß an den abgehobenen Schichtaufbau 50 ist der Aufsatzteil 8 und im Anschluß an diesen unterhalb des Aufsatzteils 8 der Tragteil 7 und der mit diesen verbundenen Einsatzteil 9 zu ersehen.

Der Sitzpolster 4 weist bei einer Breite 71 eine Tiefe 72 auf, wobei ein Mittel 73 des Federkerns 10 in Richtung der Tiefe 72 gesehen, in einem Abstand 74 von der vorderen Stirnkante des Sitzpolsters 4 angeordnet ist. Der Abstand 74 entspricht dabei in etwa 2/3 der Tiefe 72 des Sitzpolsters 4 und ist im Bereich der höchstbelasteten Sitzfläche 44 angeordnet.

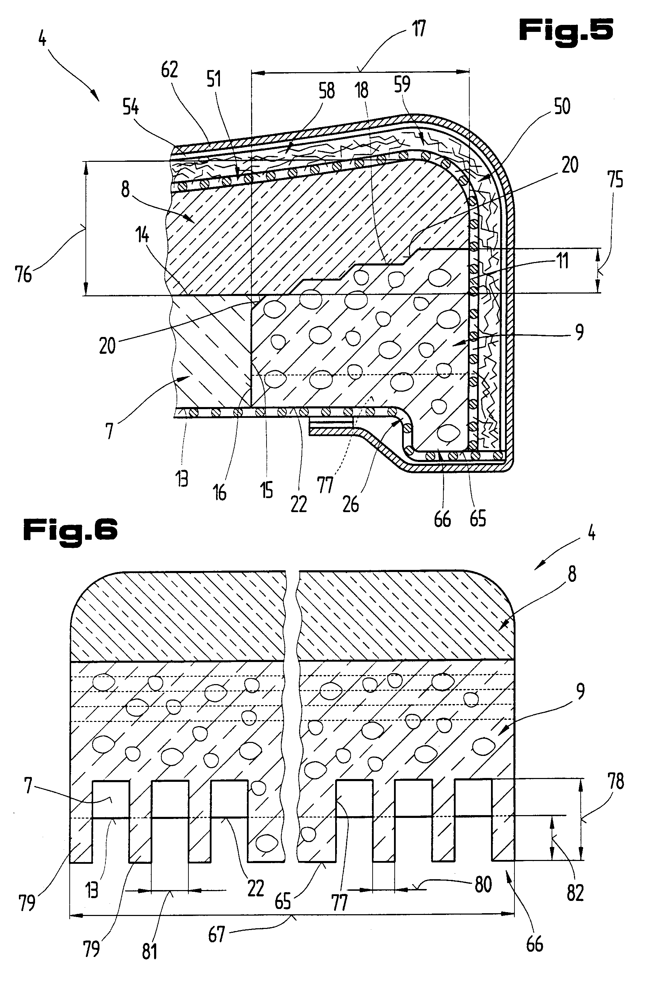

In den Fig. 5 und 6 ist eine Ausführungsvariante für den Einsatzteil 9 gezeigt, wobei wiederum für gleiche Teile gleiche Bezugszeichen verwendet wurden.

Der Tragteil 7 ist mit seiner Stirnfläche 15 mit der Verbindungsfläche 16 des Einsatzteils 9 verbunden. Die Verbindung dieser beiden Flächen, kann, wie dies bereits in den vorangehenden Figuren detaillierter beschrieben worden ist, auf verschiedenste Arten erfolgen. Der Unterschied in der Ausbildung des Einsatzteils 9 besteht gegenüber jener Ausführung, wie sie in Fig. 2 dargestellt ist, darin, daß die Oberseite 18 des Einsatzteils 9 um eine Höhe 75 über die Oberseite 14 des Tragteils 7 in Richtung des Aufsatzteils 8 vorragt. Die Oberseite 18 des Einsatzteils 9 weist mehrere zueinander versetzt angeordnete Abstützflächen 20 auf, die wiederum in Richtung der Stirnkante 11 geneigt ausgebildet sind. Die Versetzung der einzelnen Abstützflächen 20 erfolgt in Richtung der Tiefe 17 zueinander und durchlaufend über die gesamte Breite 67 des Sitzpolsters 4. Somit entsteht eine schuppenförmige bzw. stufenartige Ausbildung der Oberseite 18.

Die Neigung der einzelnen Abstützflächen 20 in Bezug auf die Verbindungsfläche 16 kann je nach Einsatzfall bzw. Verwendung verschiedenartig ausgeführt sein. Somit kann durch eine unterschiedliche Neigung der einzelnen Abstützflächen zueinander eine verschiedene Abstützcharakteristik des Aufsatzteils 8 am Einsatzteil 9 erreicht werden. Die Höhe 75 jenes Teils des Einsatzteils 9, welcher über die Oberseite 14 des Tragteils 7 in Richtung des Aufsatzteils 8 vorragt, entspricht dabei in etwa 30 % einer maximalen Dicke 76 des Aufsatzteils 8.

Die Fig. 6 zeigt den Sitzpolster 4 gemäß der Ausführung in Fig. 5 in einer Stirnansicht mit abgehobenem Schichtaufbau 50.

Der Aufsatzteil 8 übergreift wiederum sowohl den Tragteil 7 als auch den Einsatzteil 9. Der Einsatzteil 9 weist im Bereich seiner Unterseite 22 Ausnehmungen 77 auf, welche von der Stirnfläche 65 des Schenkels 66 sich in eine Höhe 78 in Richtung des Aufsatzteils 8 erstrecken. Diese Ausnehmungen 77 sind in ihrer Längserstreckung in einer senkrecht zur Stirnkante 11 des Einsatzteils 9 ausgerichteten Ebene angeordnet und reichen über die gesamte Tiefe 17 bis zur Verbindungsfläche 16. Es ist aber auch möglich, die Ausnehmungen nur über einen Teilbereich der Tiefe 17 anzuordnen. Zwischen den einzelnen Ausnehmungen 77 bilden sich einzelne stützfußartige Vorsprünge 79 mit einer Breite 80 aus. Die Ausnehmungen 77 weisen dabei eine Weite 81 auf, welche sich in Richtung der Breite 67 des Sitzpolsters 4 erstreckt. Der Schenkel 66 bzw. die stützfußartigen Vorsprünge 79 ragen über die Unterseite 22 des Einsatzteils 9 um eine Höhe 82 in vom Aufsatzteil 8 entgegengesetzter Richtung vor.

Durch die Variation der Breite 80 der Vorsprünge 79 bzw. der Weite 81 der Ausnehmungen 77 in Bezug auf die Breite 67 des Sitzpolsters 4 lassen sich auf einfache Art und Weise verschiedenste Dämpfungscharakteristiken des Gesamtaufbaus des Sitzpolsters 4 am Traggestell 5 erzielen. Weiters ist es durch die Variation der Höhe 78 der Ausnehmungen 77 möglich, die Luftzu- und abfuhr im Bereich der Sitzfläche 44 zu steuern und so ein günstiges Sitzklima im speziellen bei Langstrekkenflügen zu ermöglichen.

Der Zusatz von Flammschutzmitteln 43 sowohl im Tragteil 7, Aufsatzteil 8 als auch Einsatzteil 9 kann gemäß den vorangegangenen Ausführungsbeispielen erfolgen. Die Anordnung von Ausnehmungen 45 bzw. Durchbrüchen 46 ist ebenfalls frei wählbar.

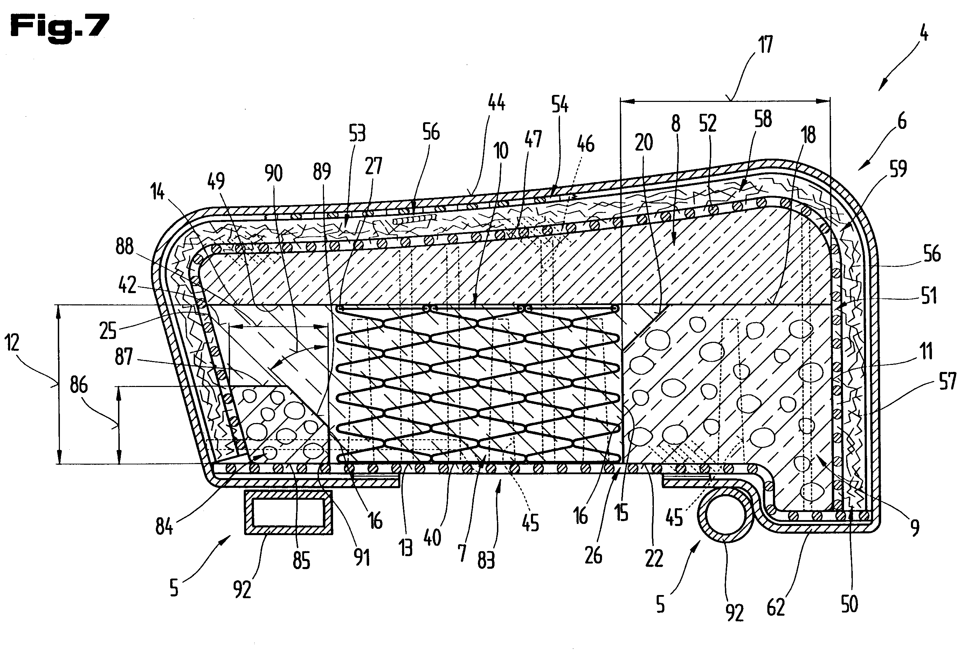

In der Fig. 7 ist eine weitere Ausführungsvariante des Sitzpolsters 4 gezeigt, wobei wiederum für gleiche Teile gleiche Bezugszeichen verwendet wurden.

So besteht bei dieser Ausführungsform der Sitzpolster 4 wiederum aus dem Tragteil 7, Aufsatzteil 8, Einsatzteil 9, dem Schichtaufbau 50 mit dem Bezugsstoff 62 sowie der Schutzschichte 26 an der Unterseite 13 bzw. 22 des Tragteils 7 bzw. Einsatzteils 9.

Zusätzlich zu den bereits vorgenannten Bestandteilen ist zwischen der hinteren Stirnkante 25 des Tragteils 7 und einem Mittelbereich 83 desselben ein weiterer Einsatzteil 84 angeordnet. Der Einsatzteil 84 ist mit seiner Unterseite 85 ebenflächig zu den Unterseiten 13 bzw. 22 angeordnet und erstreckt sich über die volle Breite 67 des Tragteils 7 bzw. Einsatzteils 9. Eine Dicke 86 des Einsatzteils 84 beträgt zwischen 20 und 80 %, bevorzugt 30 und 50 % der Dicke 12 des Tragteils 7, wodurch eine Oberseite 87 von der Oberseite 14 des Tragteils 7 überdeckt ist.

Von der hinteren Stirnkante 25 des Sitzpolsters 4 ist die Verbindungsfläche 16 des Einsatzteils 84 um eine Tiefe 88 in Richtung der Stirnkante 11 des Sitzpolsters 4 distanziert angeordnet, welche zwischen 30 mm und 100 mm betragen kann.

Zwischen der Verbindungsfläche 16 und der Oberseite 87 befindet sich wiederum eine Abstützfläche 89, welche um den Winkel 90 ausgehend von der Verbindungsfläche 16 in Richtung der hinteren Stirnkante 25 des Tragteils 7 geneigt verläuft und sich über die volle Breite des Einsatzteils 84 erstreckt.

Der weitere Einsatzteil 84 besteht wiederum aus einem Polyäthylenschaum mit einem Raumgewicht zwischen 15 und 50 kg/m³, bevorzugt 25 kg/m³ bei einer Härte zwischen 30 und 100 kPa bei 40 % Eindrucktiefe, wobei der Kunststoffschaum eine bevorzugt geschlossenzellige Struktur aufweist. Die Verbindung zwischen dem Einsatzteil 84 mit seiner Verbindungsfläche 16 und einer hinteren Stirnfläche 91 des Tragteils 7 kann, wie dies bereits in der Fig. 2 detaillierter beschrieben worden ist, auf die verschiedenste Art und Weise erfolgen.

Um einen ausreichenden Schutz des Sitzpolsters vor Beschädigungen bzw. Flammeinwirkung von unten her zu erreichen, sind die Unterseiten 85, 13 und 22 wiederum mit der Schutzschichte 26 abgedeckt, welche bevorzugt durch bereichsweise voneinander distanzierte Klebestellen mit dem Einsatzteil 84, Tragteil 7 sowie Einsatzteil 9 verbunden ist.

Die Lagen des Schichtaufbaus 50 entsprechen jenen Lagen, wie sie bereits anhand der Fig. 2 detailliert beschrieben worden sind und bestehen aus der Zwischenschichte 51 mit den Fäden 52, der Mittelschichte 53 und der Trägerlage 54. Die Mittelschichte 53 ist als Faserlage 58 in Form des Vlieses 59 aus verschiedenartigen Fasern 56 bzw. Fäden 57 gebildet. Der gesamte Schichtaufbau 50 sowie Teilbereiche der Unterseite des Sitzpolsters 4 sind mit dem Bezugsstoff 62 überzogen.

Der Aufsatzteil 8 erstreckt sich von der vorderen Stirnkante 11 des Sitzpolsters 4 über die gesamte Breite bis hin zur hinteren Stirnkante 25 und überdeckt so mit seiner Auflagefläche 49 die Oberseite 14 des Tragteils 7 sowie die Oberseite 18 des Einsatzteils 9 und ist im Bereich der Oberseite 47 von der vorderen Stirnkante 11 in Richtung der hinteren Stirnkante 25 sich verjüngend ausgebildet. Die Härte des Aufsatzteils 8 beträgt wiederum zwischen 120 N und 300 N, bevorzugt 180 N bei einem Raumgewicht zwischen 35 kg/m³ und 55 kg/m³.

Unterhalb der beiden Einsatzteile 9 bzw. 84 sind jeweils Tragrohre 92 des Traggestells 5 angeordnet bzw. stützt sich der Sitzpolster 4 an diesem ab. Bedingt durch diese Anordnung sowie die größere Härte der beiden Einsatzteile gegenüber den anderen Bestandteilen des Sitzpolsters 4 wird die Abstützwirkung des Sitzpolsters 4 vom Benutzer eines solchen her gesehen günstig beeinflußt. Bei einer Belastung von 14 g auf die Sitzfläche 44 des Sitzpolsters 4 stützt sich der Sitzpolster 4 über die Einsatzteile 9 bzw. 84 an den Tragrohren 92 des Traggestells 5 ab. Damit kann der Tragteil 7 mit einer geringeren Festigkeit bzw. einer höheren elastischen Verformbarkeit hergestellt werden und wird trotzdem eine stabile Lagerung des Sitzpolsters am Traggestell 5 bzw. dessen Tragrohre 92 über die Einsatzteile 9 bzw. 84 sichergestellt.

Vor allem wird dadurch das Gesäß des Benutzers eines derartigen Sitzpolsters zwischen den beiden Einsatzteilen 9 und 84 zentriert, wodurch sich auch ein besseres Sitzgefühl für den Benutzer ergibt.

Ein weiterer Vorteil dieser Anordnung der als Schwellen wirkende Einsatzteile 9 bzw. 84 liegt darin, daß beispielsweise bei den sogenannten Schrägbelastungstests, bei welchen eine Belastung von 16 g in Richtung schräg nach vorne auf den Sitzpolster einwirkt, eine Verbesserung der Sicherheit eines Benutzers eines derartigen Flugzeugsitzes auftritt, da auch bei diesen sehr hohen Belastungen eine hohe Dämpfungswirkung durch den Einsatzteil 9, 84 gegeben ist und welche vor allem verhindert, daß der Benutzer mit hoher Geschwindigkeit aus dem Sitz herausgleitet und dadurch beim Aufprall auf den Vordersitz sich Verletzungen zuzieht. Der Vorteil des verwendeten Polyäthylenschaums mit der vorangegebenen höheren Härte, insbesondere bei geschlossenzelliger Ausführung, liegt darin, daß bei der Verformung des Zellgerüstes unter Druckbeanspruchung dieses zusammengedrückt wird und die für das Zusammendrücken aufzuwendende Verformungsenergie dazu genutzt wird, um Energie durch die hohe Erdbeschleunigung abzubauen und damit den Benutzer eines derartigen Sitzes vor Verletzungen bei einem Aufprall oder Anprall zu schützen.

Je nach der gewünschten Schutzfunktion ist es daher möglich, nur im Bereich der vorderen Stirnkante 11 oder der hinteren Stirnkante 25 einen Einsatzteil anzuordnen. Bei Sitzen, die nur einer vertikal gegen die Aufstandsfläche gerichteten Belastung ausgesetzt werden, kann sich unter Umständen die Anordnung nur eines Einsatzteils 84 im Bereich der hinteren Stirnkante 25 als ausreichend erweisen, während vor allem bei einer Belastung des Sitzes auch in einer Richtung schräg nach vorne auch die Anordnung eines Einsatzteils 9 nur im Bereich der vorderen Stirnkante 11 als ausreichend erweisen kann.

Um einen Vollschutz zu erreichen, ist es aber ebenso möglich, beide Einsatzteile 9 und 84 gemeinsam in einem Tragteil 7 anzuordnen. Vorteilhaft ist dabei aber auch noch, daß durch Erhöhung der Festigkeit gleichzeitig eine zusätzliche Gewichtsverringerung des Sitzpolsters erreicht wird, wodurch die Betriebskosten eines mit derartigen Sitzen ausgerüsteten Fahrzeuges, insbesonderes Flugzeuges, gesenkt werden können. Dabei ist zu berücksichtigen, daß diese Gewichtsreduktionen bei den fix installierten Ausrüstungsgegenständen in einem Flugzeug besonders hoch und vorteilhaft zu bewerten sind, da dieses Gewicht unabhängig von der Anzahl der beförderten Passagiere bei jedem Flug mittransportiert werden muß.

Bei Testversuchen, welche für derart ausgebildete Sitzpolster 4 Anwendung finden, hat sich herausgestellt, daß bei einer derart hohen Belastung der Einsatzteile 9 bzw. 84 von den Tragrohren 92 des Traggestells 5 her das Zellgerüst im Schaumkörper zusammengedrückt wird, wodurch der Verformungsweg als Dämpfungsweg zur Verfügung steht. Dadurch wird ein solcher Aufprall gedämpft und der Benutzer eines derartigen Sitzes vor Verletzungen von durchstechenden Teilen des Traggestells 5 sicher geschützt.

Weiters ist es möglich, im Mittelbereich 83 des Tragteils 7 zwischen den beiden Verbindungsflächen 16 der Einsatzteile 9 bzw. 84 im Tragteil 7 den Federkern 10 anzuordnen, was jedoch nicht zwingend ist. Die hier gezeigte Ausführungsform des Federkerns 10 unterscheidet sich von jener Ausführungsform, wie sie in Fig. 2 dargestellt worden ist, dadurch, daß die Knotenpunkte 27 der Auflagefläche 49 des Aufsatzteils 8 zugeordnet sind, wobei sich die Knotenpunkte nahe der Oberseite 14 des Tragteils befinden.

Die Oberseite 40 des Federkerns 10 ist in diesem Ausführungsbeispiel der Unterseite 13 des Tragteils 7 zugewandt. Die Längenerstreckung des Federkerns 10 entspricht dabei annähernd der Dicke 12 des Tragteils 7. Es ist jedoch auch möglich, wie dies bereits in Fig. 2 beschrieben worden ist, sowohl die Knotenpunkte 27 bzw. die Oberseite 40 von der Oberseite 14 bzw. Unterseite 13 des Tragteils 7 distanziert anzuordnen.

Es ist auch möglich, wiederum Ausnehmungen 45 bzw. Durchbrüche 46 sowohl im Tragteil 7 als auch in den Einsatzteilen 9 bzw. 84 sowie dem Aufsatzteil 8 anzuordnen, um das Sitzklima durch eine gesteuerte Luftzu- bzw. abfuhr zu begünstigen.

Des weiteren ist in Verbindung mit der wahlweisen oder gemeinsamen Anordnung der Einsatzteile 9 bzw. 84 noch festzuhalten, daß diese unabhängig davon, ob sie nur in einem Tragteil 7 oder in Trag- und Aufsatzteil 7 bzw. 8 angeordnet sind, bei jeder beliebigen Konstruktion eines Sitzpolsters 4 Verwendung finden können. Vor allem ist es völlig unabhängig, mit welchen Schichten der Trag- bzw. Aufsatzteil im Bereich der Sitzfläche 44 der Stirnkanten 11 bzw. 25 und der Seitenkanten 24 beschichtet sind.

Vor allem ist die erfindungsgemäßen Lösungsidee der Anordnung dieser Einsatzteile nicht an den Aufbau und das Vorhandensein eines Schichtaufbaus 50 gebunden, sondern kann völlig unabhängig davon eingesetzt werden. Vor allem können diese Vorteile auch beispielsweise für Sitze in Eisenbahnwaggons oder dgl., insbesondere in Hochgeschwindigkeitszügen genutzt werden, wo ähnlich hohe Belastungen bei einem Zusammenstoß bzw. einem Nothalt auftreten können.

Der Ordnung halber sei noch festgehalten, daß zum besseren Verständnis der Erfindung die in den Zeichnungen dargestellten Sitzpolster 4 teilweise schematisch und maßgeblich unproportional dargestellt wurden. Weiters wurden die einzelnen Schichtdicken der verschiedensten Lagen maßstäblich stark verzerrt dargestellt.

### Bezugszeichenaufstellung

- 1: Doppelsitzbank
- 2: Sitz
- 3: Rückenlehne
- 4: Sitzpolster
- 5: Traggestell
- 6: Stützkörper
- 7: Tragteil
- 8: Aufsatzteil
- 9: Einsatzteil
- 10: Federkern
- 11: Stirnkante
- 12: Dicke
- 13: Unterseite
- 14: Oberseite
- 15: Stirnfläche
- 16: Verbindungsfläche
- 17: Tiefe
- 18: Oberseite
- 19: Winkel
- 20: Abstützfläche
- 21: Distanz
- 22: Unterseite
- 23: Verbindungsschichte
- 24: Seitenkante
- 25: Stirnkante
- 26: Schutzschichte
- 27: Knotenpunkt
- 28: Längsdraht
- 29: Querdraht
- 30: Nut
- 31: Vorsprung
- 32: Auflagefläche
- 33: Zwischenschichte
- 34: Lage
- 35: Lage
- 36: Lage
- 37: Schaumkunststoff
- 38: Schaumkunststoff
- 39: Schaumkunststof
- 40: Oberseite
- 41: Abstand
- 42: Kunststoffschaum
- 43: Flammschutzmittel
- 44: Sitzfläche
- 45: Ausnehmung
- 46: Durchbruch
- 47: Oberseite
- 48: Schaumkunststoff
- 49: Auflagefläche
- 50: Schichtaufbau
- 51: Zwischenschichte
- 52: Faden
- 53: Mittelschichte
- 54: Trägerlage
- 55: Kleber
- 56: Faser
- 57: Faden
- 58: Faserlage
- 59: Vlies
- 60: Faden
- 61: Durchmesser
- 62: Bezugsstoff
- 63: Oberfläche
- 64: Klettband
- 65: Stirnfläche
- 66: Schenkel
- 67: Breite
- 68:
- 69:
- 70:
- 71: Breite
- 72: Tiefe
- 73: Mittel
- 74: Abstand
- 75: Höhe
- 76: Dicke
- 77: Ausnehmung
- 78: Höhe
- 79: Vorsprung
- 80: Breite
- 81: Weite
- 82: Höhe
- 83: Mittelbereich
- 84: Einsatzteil
- 85: Unterseite
- 86: Dicke
- 87: Oberseite
- 88: Tiefe
- 89: Abstützfläche
- 90: Winkel
- 91: Stirnfläche
- 92: Tragrohr

## Patentansprüche

1. Fahrzeugsitz mit einem Sitzpolster (4), insbesondere Flugzeugsitz, mit einem aus einem Kunststoffschaum gebildeten Stützkörper (6), der aus einem Tragteil (7) aus einem elastischen Kunststoffschaum (42) mit einem ersten Raumgewicht und einem Aufsatzteil (8) aus einem elastischen Kunststoffschaum mit einem zweiten zum Raumgewicht des Tragteils (7) geringeren Raumgewicht und aus einem Einsatzteil (9, 84), welcher zumindest über einen Teilbereich der Dicke (12) des Tragteils (7) und/oder des Aufsatzteils (8) zwischen einer vorderen und/oder hinteren Stirnkante (11, 25) des Trag- und/oder Aufsatzteils (7, 8) und etwa einem Mittelbereich desselben angeordnet ist, und einem Bezugsstoff (62) besteht, die miteinander verbunden, insbesondere stellenweise verklebt sind und gegebenenfalls mit einer zwischen dem Stützkörper (6) und dem Bezugsstoff (62) angeordneten, flammfesten, aus Gitter bzw. netzförmig verlegten, hochtemperaturbeständigen Fasern bzw. Fäden (52) gebildeten Zwischenschicht, dadurch gekennzeichnet, daß der Einsatzteil (9, 84) eine höhere Härte als der Trag- und/oder Aufsatzteil (7, 8) aufweist und daß das Raumgewicht des Einsatzteiles (9, 84) geringer ist, als das erste Raumgewicht des Tragteils (7).

2. Fahrzeugsitz nach Anspruch 1, dadurch gekennzeichnet, daß zumindest über einen Teilbereich der Dicke (12) des Tragteils (7) zwischen einer hinteren Stirnkante (25) des Tragteils (7) und etwa einem Mittelbereich desselben ein weiterer Einsatzteil (9,84) angeordnet ist, der eine höhere Härte als der Tragteil (7) aufweist und daß das Raumgewicht des Einsatzteils (84) geringer ist als das erste Raumgewicht des Tragteils (7).

3. Fahrzeugsitz nach Anspruch 1 oder 2, dadurch gekennzeichnet, daß der Einsatzteil (9) und der weitere Einsatzteil (84) das gleiche Raumgewicht und/oder die gleiche Härte aufweisen.

4. Fahrzeugsitz nach einem oder mehreren der Ansprüche 1 bis 3, dadurch gekennzeichnet, daß sich der Einsatzteil (9) und/oder der weitere Einsatzteil (84) über eine Höhe erstreckt, die zwischen 20 und 80 %, bevorzugt 30 bis 50 % der Dicke (12) des Tragteils (7) entspricht.

5. Fahrzeugsitz nach einem oder mehreren der Ansprüche 1 bis 4, dadurch gekennzeichnet, daß der Einsatzteil (9, 84) aus einem Polyäthylenschaum gebildet ist.

6. Fahrzeugsitz nach einem oder mehreren der Ansprüche 1 bis 5, dadurch gekennzeichnet, daß der Einsatzteil (9, 84) ein Raumgewicht von 15 - 50 kg/m³, bevorzugt 25 kg/m³, aufweist.

7. Fahrzeugsitz nach einem oder mehreren der Ansprüche 1 bis 6, dadurch gekennzeichnet, daß die Härte des Einsatzteils (9, 84) zwischen 30 und 100 kPa bei 40 % Eindrucktiefe beträgt.

8. Fahrzeugsitz nach einem oder mehreren der Ansprüche 1 bis 7, dadurch gekennzeichnet, daß die Härte des Tragteils (7) zwischen 350 N und 550 N, bevorzugt 400 N, beträgt.

9. Fahrzeugsitz nach einem oder mehreren der Ansprüche 1 bis 8, dadurch gekennzeichnet, daß die Härte des Aufsatzteils (8) zwischen 120 N und 300 N, bevorzugt 180 N beträgt.

10. Fahrzeugsitz nach einem oder mehreren der Ansprüche 1 bis 9, dadurch gekennzeichnet, daß der Einsatzteil (9, 84) aus einem geschlossenzelligen Kunststoffschaum, insbesondere aus Polyäthylen, besteht.

11. Fahrzeugsitz nach einem oder mehreren der Ansprüche 1 bis 10, dadurch gekennzeichnet, daß der Einsatzteil (9) im Bereich seiner Stirnkante (11) auf der vom Aufsatzteil (8) abgewendeten Seite mit einem über eine Unterseite (13) des Tragteils (7) und/oder des Einsatzteils (9) vorragender Schenkel (66) ausgebildet ist.

12. Fahrzeugsitz nach einem oder mehreren der Ansprüche 1 bis 11, dadurch gekennzeichnet, daß eine Abstützfläche (20, 89) zwischen einer einer vorderen und/oder hinteren Stirnfläche (15, ) des Trag- und/oder Aufsatzteils (7, 8) unmittelbar benachbart zugeordneten Verbindungsfläche (16) und einer Oberseite (18, 87) des Einsatzteils (9) und/oder des weiteren Einsatzteils (84) unter einem Winkel (19) abgeschrägt und/oder räumlich, insbesondere konvex verformt ist.

13. Fahrzeugsitz nach einem oder mehreren der Ansprüche 1 bis 12, dadurch gekennzeichnet, daß die Abstützfläche (20, 89) durch eine unter einem Winkel (19, 90) zur Verbindungsfläche (16) in Richtung der vorderen Stirnkante (11) und/oder der hinteren Stirnkante (25) des Einsatzteiles (9, 84) geneigte und in Richtung einer Breite des Sitzpolsters (4) verlaufende Abschrägung gebildet ist.

14. Fahrzeugsitz nach einem oder mehreren der Ansprüche 1 bis 13, dadurch gekennzeichnet, daß der Einsatzteil (9, 84) sich über die gesamte Breite (67) des Stützkörpers (6) erstreckt.

15. Fahrzeugsitz nach einem oder mehreren der Ansprüche 1 bis 14, dadurch gekennzeichnet, daß der Einsatzteil (9) sich nur über einen Teil einer Dicke (12) des Tragteils (7) erstreckt und über seine parallel zur Breite (67) des Sitzpolsters (4) sich erstreckende Länge über stützfußartige Vorsprünge (79) bis in den Bereich der Unterseite (13) des Tragteils (7) bzw. zu einer Stirnfläche (65) des Schenkels (66) vorragt.

16. Fahrzeugsitz nach einem oder mehreren der Ansprüche 1 bis 15, dadurch gekennzeichnet, daß der Einsatzteil (9) über einen Teilbereich einer Dicke (76) des Aufsatzteils (8), die maximal 30% der Dicke (76) des Aufsatzteils (8) entspricht, in diesen vorragt.

17. Fahrzeugsitz nach einem oder mehreren der Ansprüche 1 bis 16, dadurch gekennzeichnet, daß der Einsatzteil (9) mit mehreren zueinander in Richtung der Tiefe (17) des Einsatzteils (9) versetzten, beispielsweise schuppenförmig bzw. stufenartig angeordneten Abstützflächen (20) versehen ist.

18. Fahrzeugsitz nach einem oder mehreren der Ansprüche 1 bis 17, dadurch gekennzeichnet, daß der Kunststoffschaum des Einsatzteils (9, 84) schwer brennbar oder mit Flammschutzmittel (43) zur Erhöhung des Abbrennwiderstandes versetzt ist.

19. Fahrzeugsitz nach einem oder mehreren der Ansprüche 1 bis 18, dadurch gekennzeichnet, daß zwischen dem Einsatzteil (9) und einem weiteren Einsatzteil (84) und/oder der hinteren Stirnkante (25) des Tragteils (7) ein Federkern (10) angeordnet ist.

20. Fahrzeugsitz nach einem oder mehreren der Ansprüche 1 bis 19, dadurch gekennzeichnet, daß eine Oberseite (40) des Federkerns (10) in einem Abstand (41) unterhalb der Ober- und/oder Unterseite (14, 13) des Tragteils (7) angeordnet ist.

21. Fahrzeugsitz nach einem oder mehreren der Ansprüche 1 bis 20, dadurch gekennzeichnet, daß zwischen dem Federkern (10) und der Unterseite (13) des Tragteils (7) eine Zwischenschichte (33) aus verschleißfestem bzw. abriebfestem Material als Druckverteilungsschicht angeordnet ist.

22. Fahrzeugsitz nach einem oder mehreren der Ansprüche 1 bis 21, dadurch gekennzeichnet, daß auf der Unterseite (13, 22) des Tragteils (7) und/oder Einsatzteils (9, 84) eine Schutzschichte (26), beispielsweise ein schwer entflammbarer Bezugsstoff angeordnet, bevorzugt über voneinander distanzierte Klebestellen verbunden ist.

23. Fahrzeugsitz nach einem oder mehreren der Ansprüche 1 bis 22, dadurch gekennzeichnet, daß die Mittelschichte (53) durch ein Vlies (59) aus zumindest einer Faserlage (58) genadelter oder thermisch gebundener Fasern bzw. Fäden (56, 57) aus Kunststoff und/oder Naturmaterialien gebildet ist, die vorzugsweise auf einer Trägerlage (54) aufgenadelt sind.

24. Fahrzeugsitz nach einem oder mehreren der Ansprüche 1 bis 23, dadurch gekennzeichnet, daß die Trägerlage (54) durch ein Gitter oder Netz aus Fasern bzw. Fäden (60) aus z.B. Polyester oder 100 % Polyamid gebildet ist und/oder ein Gewicht von 15 bis 90 g/m², bevorzugt 35 g/m², aufweist.

25. Fahrzeugsitz nach einem oder mehreren der Ansprüche 1 bis 24, dadurch gekennzeichnet, daß die Trägerlage (54) aus einem Gewebe bzw. Gewirke aus Fasern bzw. Fäden (60) aus Kunststoff, insbesondere einem präoxidierten Polyacrylat und/oder Polyamid, Glasfilamenten und/oder Naturmaterialien gebildet ist.

26. Fahrzeugsitz nach einem oder mehreren der Ansprüche 1 bis 25, dadurch gekennzeichnet, daß die Trägerlage (54) als Netz ausgebildet ist und die Netzfäden bzw. -fasern aus Polyester bzw. Polyamid bestehen.

27. Fahrzeugsitz nach einem oder mehreren der Ansprüche 1 bis 26, dadurch gekennzeichnet, daß eine Stärke der Fasern bzw. Fäden (60) einen dtex von 22/1 bzw. 44F10 aufweist.

28. Fahrzeugsitz nach einem oder mehreren der Ansprüche 1 bis 27, dadurch gekennzeichnet, daß das die Trägerlage (54) bildende Netz oder Gitter bzw. Gewirke oder Gestricke 80 bis 180, bevorzugt 130 bis 140 Maschenreihen/dm Länge aufweist.

29. Fahrzeugsitz nach einem oder mehreren der Ansprüche 1 bis 28, dadurch gekennzeichnet, daß das die Trägerlage (54) bildende Netz oder Gitter bzw. Gewirke oder Gestricke 40 bis 140, bevorzugt 60 bis 120 Maschenreihen/dm Länge aufweist.

30. Fahrzeugsitz nach einem oder mehreren der Ansprüche 1 bis 29, dadurch gekennzeichnet, daß das Gewirke oder Gestricke aus dreimal 400 bis 1500, bevorzugt 580 bis 1160 Fäden/Flächeneinheit besteht.

31. Fahrzeugsitz nach einem oder mehreren der Ansprüche 1 bis 30, dadurch gekennzeichnet, daß das Netz der Trägerlage (54) eine Längs- und Querdehnung zwischen 30 und 50 %, bevorzugt zwischen 34 und 44 %, aufweist.

32. Fahrzeugsitz nach einem oder mehreren der Ansprüche 1 bis 31, dadurch gekennzeichnet, daß das die Trägerlage (54) bildende Netz einer Höchstzugkraft längs und/oder quer zwischen 200 und 500 N widersteht.

33. Fahrzeugsitz nach einem oder mehreren der Ansprüche 1 bis 32, dadurch gekennzeichnet, daß die Reißfestigkeit des die Trägerlage (54) bildenden Netzes quer und längs zwischen 240 und 500 N/cm beträgt.

34. Fahrzeugsitz nach einem oder mehreren der Ansprüche 1 bis 33, dadurch gekennzeichnet, daß die Faserlage (58) vorwiegend aus Fasern bzw. Fäden (56, 57) aus Naturmaterial , z.B. Wolle oder Baumwolle besteht, die bevorzugt mit einem Anteil zwischen 5 und 20 %, bevorzugt 10 %, mit Fasern bzw. Fäden (56, 57) aus Polypropylen bzw. Polyäthylen oder Polyacrylat vermischt ist.

35. Fahrzeugsitz nach einem oder mehreren der Ansprüche 1 bis 34, dadurch gekennzeichnet, daß die Faserlage (58) vorwiegend aus Fasern bzw. Fäden (56, 57) aus Kunststoff, z.B. aus Polypropylen und/oder Polyäthylen und/oder Polyacrylat und/oder Polybenzimidazol besteht und daß zumindest ein Anteil dieser Fasern bzw. Fäden (56, 57) eine Schmelztemperatur von über 1000°C aufweist.

36. Fahrzeugsitz nach einem oder mehreren der Ansprüche 1 bis 35, dadurch gekennzeichnet, daß ein Teil von Fasern bzw. Fäden (56, 57) der Faserlage (58) aus Kunststoff gebildet ist und dieser aus Thermoplasten besteht.

37. Fahrzeugsitz nach einem oder mehreren der Ansprüche 1 bis 36, dadurch gekennzeichnet, daß die Fasern bzw. Fäden (56, 57) der Faserlage (58) Kunststoffe mit einem Plastifizierungs- bzw. Erweichungspunkt zwischen 100 und 150 Grad C, bevorzugt zwischen 100 und 120°C, aufweisen.

38. Fahrzeugsitz nach einem oder mehreren der Ansprüche 1 bis 37, dadurch gekennzeichnet, daß die Fasern bzw. Fäden (56, 57) der Faserlage (58), insbesondere aus Polypropylen oder Aramid oder Polyamid, eine Länge von 40 bis 80 mm aufweisen.

39. Fahrzeugsitz nach einem oder mehreren der Ansprüche 1 bis 38, dadurch gekennzeichnet, daß die Fasern bzw. Fäden (56, 57) der Faserlage (58), insbesondere aus Polypropylen oder Aramid oder Polyamid, aus Filamenten hergestellt sind.

40. Fahrzeugsitz nach einem oder mehreren der Ansprüche 1 bis 39, dadurch gekennzeichnet, daß das Vlies (59) auf ein Flächengewicht zwischen 300 und 500 g/m² thermisch verdichtet ist.

41. Fahrzeugsitz nach einem oder mehreren der Ansprüche 1 bis 40, dadurch gekennzeichnet, daß die Zwischenschichte (51) mit den Fasern bzw. Fäden (56, 57) der Faserlage (58) des Vlieses (59) durch einen Nadelvorgang miteinander verbunden ist und/oder die Zwischenschichte (51), in einem der Trägerlage (54) gegenüberliegen -den Oberflächenbereich des Vlieses (59) angeordnet ist.

42. Fahrzeugsitz nach einem oder mehreren der Ansprüche 1 bis 41, dadurch gekennzeichnet, daß die Zwischenschichte (51) aus einem Netz oder Gitter oder Gewebe oder Gewirke oder dgl. aus Fasern und/oder Fäden (56, 57) aus Glas und/oder Metall und/oder Keramik und/oder Kohle bestehen.

43. Fahrzeugsitz nach einem oder mehreren der Ansprüche 1 bis 42, dadurch gekennzeichnet, daß die Zwischenschichte (51) ein Gewicht von ca. 80 bis 185 g/m², bevorzugt 120 g/m², aufweist.

44. Fahrzeugsitz nach einem oder mehreren der Ansprüche 1 bis 43, dadurch gekennzeichnet, daß eine Verbindungsvorrichtung zwischen dem Vlies (59) bzw. der Trägerlage (54) und dem Bezugsstoff (62) angeordnet ist.

45. Fahrzeugsitz nach einem oder mehreren der Ansprüche 2 bis 44, dadurch gekennzeichnet, daß die Verbindungsvorrichtung durch ein Klettband (64) oder ein Tragband für einen Reißverschluß gebildet ist.

## Claims

1. Vehicle seat with a cushion (4), particularly an airplane seat, comprising a supporting body (6) of foamed plastic, which consists of a supporting part (7) of a resilient plastic foam (42) having a first specific gravity and a sitting part (8) of a resilient plastic foam with a second specific gravity which is less than the specific gravity of the supporting part (7) and an insert piece (9, 84) which is disposed over at least part of the thickness (12) of the supporting part (7) and/or of the sitting part (8)between a forward and/or back leading edge (11, 25) of the supporting or sitting part (7, 8) and over approximately a central area thereof, and of an upholstery material (62), which are connected, in particular are glued together in places and, if necessary, arranged between the supporting body (6) and the upholstery material (62)a flame-resistant intermediate layer formed from a lattice or from high-temperature-resistant fibres or threads arranged in a lattice form, characterised in that the insert piece (9, 84) has a greater hardness than the supporting or sitting part (7, 8), and in that the specific gravity of the insert piece (9, 84) is less than the first specific gravity of the supporting part (7).

2. Vehicle seat according to claim 1, wherein at least over a portion of the thickness (12)of the supporting part (7) between a rear end edge (25)of the supporting part (7) and approximately a central region thereof a further insert piece (9, 84)is arranged which has a greater hardness than the supporting part (7) and wherein the specific gravity of the insert piece (84) is less than the First specific gravity of the supporting part (7).

3. Vehicle seat according to claim 1 or 2, wherein the insert piece (9) and the further insert piece (84) have identical specific gravity and/or identical hardness.

4. Vehicle seat according to one or more of claims 1 to 3, wherein the insert piece (9) and/or the further insert piece (84) extends over a height which corresponds to between 20 and 80%, preferably 30 to 50% of the thickness (12) of the supporting part (7).

5. Vehicle seat according to one or more of claims 1 to 4, wherein the insert piece (9, 84) consists of a polyethylene foam.

6. Vehicle seat according to one or more of claims 1 to 5, wherein the insert piece (9, 84) has a specific gravity of 15-50 kg/m³, preferably 25 kg/m³.

7. Vehicle seat according to one or more of claims 1 to 6. wherein the hardness of the insert piece (9, 84)is between 30 and 100 kPa at 40% impression depth.

8. Vehicle seat according to one or more of claims 1 to 7, wherein the hardness of the supporting part (7) is between 350 N and 550 N, preferably 400 N.

9. Vehicle seat according to one or more of claims 1 to 8, wherein the hardness of the sitting part(8) is between 120 N and 300 N, preferably 180 N.

10. Vehicle seat according to one or more of claims 1 to 9, wherein the insert piece (9, 84) consists of a closed-cell plastic foam, in particular of polyethylene.

11. Vehicle seat according to one or more of claims 1 to 10, wherein the insert piece (9), in the region of its front edge (11)on the side facing away from the sitting part (8) is formed by a shank (66) projecting over an underside of the supporting part (7) and/or the insert piece (9).

12. Vehicle seat according to one or more of claims 1 to 11, wherein a support face (20, 89)between a connecting area (16) which is immediately adjacent to a front and/or rear face (15) of the supporting and/or sitting part (7, 8), and an upper side (18, 87)of the insert piece(9) and/or the further insert piece (84) is inclined at an angle (19) and/or spatially deformed, in particular in a convex manner.

13. Vehicle seat according to one or more of claims 1 to 12, wherein the support face (20,89) is formed by an inclination extending in the direction of the width of the cushion (4)which is inclined at an angle (19,90) to the connecting face (16) in the direction of the front edge (11)or the rear edge (25) of the insert piece (9,84).

14. Vehicle seat according to one or more of claims 1 to 13, wherein the insert piece (9,84) extends over the whole width of the supporting body (6).

15. Vehicle seat according to one or more of claims 1 to 14,wherein the insert piece (9) extends only over a portion of a thickness (12) of the supporting part (7) and, by its length extending parallel to the width (67) of the cushion (4) via projections constructed like support legs, projects into the region of the underside (13) of the supporting part (7), or to an end face of the shank (66).

16. Vehicle seat according to one or more of claims 1 to 15, wherein the insert piece (9) projects over a part area of the sitting part (8), of a thickness (76), which corresponds to a maximum of 30% of the thickness of the sitting part(8.

17. Vehicle seat according to one or more of claims 1 to 16, wherein the insert piece (9) is provided with several support faces which are offset to one another in the direction of the depth (17) of the insert piece (9), for example arranged in an imbrica-ted or step-like manner.

18. Vehicle seat according to one or more of claims 1 to 17, wherein the plastic foam of the insert piece (9,84) is flame-resistant, or mixed with a flameproofing agent (43)to increase the burning resistance.

19. Vehicle seat according to one or more of claims 1 to 18, wherein a spring core (10) is arranged between the insert piece (9) and a further insert piece (84) and/or the rear end edge (25) of the supporting part (7).

20. Vehicle seat according to one or more of claims 1 to 19, wherein an upper side (40) of the spring core (10) is arranged at a distance (41) beneath the upper and/or underside (14,13) of the supporting part (7).

21. Vehicle seat according to one or more of claims 1 to 20, wherein between the spring core (10) and the underside (13) of the supporting part (7) an intermediate layer (33) of wear-resistant and abrasion-proof material is arranged as a pressure-distributing layer.

22. Vehicle seat according to one or more of claims 1 to 21, wherein on the underside (13,22) of the supporting part (7) and/or the insert piece (9,84) a protective layer (26), for example a flame-retardant upholstery material is arranged, preferably by adhesive points spaced apart from one another.

23. Vehicle seat according to one or more of claims 1 to 22, wherein the central layer (53) is formed by a batt (59) of at least one layer of fibres (58) consisting of needle-punched or thermally connected fibres or threads (56,57) of plastic and/or of natural materials which are preferably needled on to a supporting layer (54).

24. Vehicle seat according to one or more of claims 1 to 23, wherein the supporting layer (54) is formed by a lattice or mesh of fibres or threads (60) of polyester for example, or of a 100% polyamide and/or which has a weight of 15 to 90 g/m², preferably 35 g/m².

25. Vehicle seat according to one or more of claims 1 to 24, wherein the supporting layer (54) is formed of a fabric or knitted material of fibres or threads (60) made of plastic, in particular a preoxidised polyacrylate and/or polyamide, glass filaments and/or natural materials.

26. Vehicle seat according to one or more of claims 1 to 25, wherein the supporting layer (54)is constructed as a net and the net threads or fibres consist of polyester or polyamide.

27. Vehicle seat according to one or more of claims 1 to 26, wherein a strength of the fibres or threads has a dtex of 22/1 or 44F10.

28. Vehicle seat according to claims 1 to 27, wherein the net or lattice or fabric or knitted material forming the supporting layer (54) comprises 80 to 180, preferably 130 to 140 stitch rows/dm length.

29. Vehicle seat according to one or more of claims 1 to 28, wherein the net or lattice or fabric or knitted material forming the supporting layer (54) has 40 to 140, preferably 60 to 120 stitch rows/dm length.

30. Vehicle seat according to one or more of claims 1 to 29, wherein the fabric or knitted material consists of three times 400 to 1500, preferably 580 to 1160 threads/surface unit.

31. Vehicle seat according to one or more of claims 1 to 30, wherein the net of the supporting layer (54) has a longitudinal or transverse extension between 30 and 50%, preferably between 34 and 44%.

32. Vehicle seat according to one or more of claims 1 to 31, wherein the net forming the supporting layer (54) has a maximum tensile strength longitudinally and/or transversely between 200 and 500 N.

33. Vehicle seat according to one or more of claims 1 to 32, wherein the tearing strength of the net forming the supporting layer (54)is between 240 and 500 N longitudinally and transversely.

34. Vehicle seat according to one or more of claims 1 to 33, wherein the fibre layer consists predominantly of fibres or threads (56,57) of natural material, for example wool or cotton, which are preferably mixed in a proportion of between 5 to 20%, preferably 10%, with fibres or threads (56,57)of polypropylene or polyethylene or polyacrylate.

35. Vehicle seat according to one or more of claims 1 to 34, wherein the fibre layer (58) consists predominantly of fibres or threads (56,57) of synthetic material such as polypropylene and/or polyethylene or polyacrylate and/or polybenzimidazole and wherein at least a proportion of these fibres or threads (56,57) have a fusion temperature of more than 1000°C.

36. Vehicle seat according to one or more of claims 1 to 35, wherein a portion of fibres or threads (56,57)of the fibre layer (58) are formed from synthetic material, and the latter consists of thermoplastics.

37. Vehicle seat according to one or more of claims 1 to 36, wherein the fibres or threads (56,57)of the fibre layer (58) comprise synthetic materials having a plasticising or melting point of between 100 and 150°C, preferably of between 100 and 120°C.

38. Vehicle seat according to one or more of claims 1 to 37, wherein the fibres or threads (56,57) of the fibre layer (58), in particular of polypropylene or aramide or polyamide, have a length of 40 to 80 mm.

39. Vehicle seat according to one or more of claims 1 to 38, wherein the fibres or threads (56,57) of the fibre layer (58), in particular of polypropylene or aramide or polyamide, are produced from filaments.

40. Vehicle seat according to one or more of claims 1 to 39, wherein the batt (59) is thermally compressed to a surface weight of between 300 and 500 g/m².

41. Vehicle seat according to one or more of claims 1 to 40, wherein the intermediate layer (51) is connected to the fibres or threads (56,57) of the fibre layer (58)of the batt (59) by needle punching and/or wherein the intermediate layer (51) is arranged in a surface area of the batt (59) opposite the supporting layer (54).

42. Vehicle seat according to one or more of claims 1 to 41, wherein the intermediate layer (51) consists of a net or lattice or fabric or knitted material or the like fibres and/or threads (56,57) of glass and/or metal and/or ceramic and/or carbon.

43. Vehicle seat according to one or more of claims 1 to 42, wherein the intermediate layer (51) has a weight of approximately 80 to 185 g/m², preferably 120 g/m².

44. Vehicle seat according to one or more of claims 1 to 43, wherein a connecting device is arranged between the batt (59)or the supporting layer (54) and the upholstery material (62).

45. Vehicle seat according to one or more of claims 2 to 44, wherein the connecting device is formed by a hook-and-pile tape (64) or a supporting tape for a zip fastener.

## Revendications

1. Siège de véhicule avec un coussin (4), en particulier siège d'avion, avec un corps d'appui (6) réalisé en une mousse de matière synthétique qui est constitué d'une pièce de support (7) en une mousse de matière synthétique élastique (42) d'un premier poids spécifique et d'une pièce de garniture (8) en une mousse de matière synthétique élastique d'un deuxième poids spécifique inférieur au poids spécifique de la pièce de support (7) et d'une pièce d'insertion (9, 84) qui est disposée au moins sur une zone partielle de l'épaisseur (12) de la pièce de support (7) et/ou de la pièce de garniture (8) entre une arête frontale avant et/ou arrière (11, 25) de la pièce de support et/ou de garniture (7, 8) et à peu près dans une zone médiane de celle-ci, et d'un tissu de revêtement (62) qui sont reliés les uns aux autres, notamment par collage par endroits et le cas échéant avec une couche intermédiaire disposée entre le corps d'appui (6) et le tissu de revêtement (62), résistant aux flammes, constituée de grilles et, respectivement de fibres ou fils (52) disposés en forme de filet, résistant à des températures élevées, caractérisé en ce que la pièce d'insertion (9, 84) a une dureté supérieure à celle de la pièce de support et/ou de garniture (7, 8) et en ce que le poids spécifique de la pièce d'insertion (9, 84) est plus réduit que le premier poids spécifique de la pièce de support (7).

2. Siège de véhicule selon la revendication 1, caractérisé en ce qu'il est disposé au moins sur une zone partielle de l'épaisseur (12) de la pièce de support (7), entre une arête frontale arrière (25) de la pièce de support (7) et à peu près une zone médiane de celle-ci une pièce d'insertion supplémentaire (9, 84) dont la dureté est plus élevée que la pièce de support (7), et en ce que le poids spécifique de la pièce d'insertion (84) est plus réduit que le premier poids spécifique de la pièce de support (7).

3. Siège de véhicule selon la revendication 1 ou 2, caractérisé en ce que la pièce d'insertion (9) et la pièce d'insertion supplémentaire (84) ont le même poids spécifique et/ou la même dureté.

4. Siège de véhicule selon l'une ou plusieurs des revendications 1 à 3, caractérisé en ce que la pièce d'insertion (9) et/ou la pièce d'insertion additionnelle (84) s'étend sur une hauteur qui correspond entre 20 et 80%, de préférence entre 30 à 50% à l'épaisseur (12) de la pièce de support (7).

5. Siège de véhicule selon l'une ou plusieurs des revendications 1 à 4, caractérisé en ce que la pièce d'insertion (9, 84) est réalisée en une mousse de polyéthylène.

6. Siège de véhicule selon l'une ou plusieurs des revendications 1 à 5, caractérisé en ce que la pièce d'insertion (9, 84) a un poids spécifique de 15-50 kg/m³, de préférence de 25 kg/m³.

7. Siège de véhicule selon l'une ou plusieurs des revendications 1 à 6, caractérisé en ce que la dureté de la pièce d'insertion (9, 84) est comprise entre 30 et 100 kPa à une profondeur d'en foncement de 40%.

8. Siège de véhicule selon l'une ou plusieurs des revendications 1 à 7, caractérisé en ce que la dureté de la pièce de support (7) est comprise entre 350N et 550N et qu'elle est de préférence de 400N.

9. Siège de véhicule selon l'une ou plusieurs des revendications 1 à 8, caractérisé en ce que la dureté de la pièce de garniture (8) est comprise entre 120N et 300N et qu'elle est de préférence de 180N.

10. Siège de véhicule selon l'une ou plusieurs des revendications 1 à 9, caractérisé en ce que la pièce d'insertion (9, 84) est réalisée en une mousse de matière synthétique à alvéoles fermées, notamment en polyéthylène.

11. Siège de véhicule selon l'une ou plusieurs des revendications 1 à 10, caractérisé en ce que la pièce d'insertion (9), au voisinage de son arête frontale (11), au côté éloigné de la pièce de garniture (8), présente une branche (66) faisant saillie sur un côté inférieur (13) de la pièce de support (7) et/ou de la pièce d'insertion (9).

12. Siège de véhicule selon l'une ou plusieurs des revendications 1 à 11, caractérisé en ce qu'une surface d'appui (20, 89) entre une surface de liaison (16) associée de manière directement avoisinante à une face frontale avant et/ou arrière (15) de la pièce de support et/ou de garniture (7, 8) et un côté supérieur (18, 87) de la pièce d'insertion (9) et/ou de la pièce d'insertion additionnelle (84) est chanfreinée suivant un angle (19) et/ou déformée spatialement, notamment de manière convexe.

13. Siège de véhicule selon l'une ou plusieurs des revendications 1 à 12, caractérisé en ce que la surface d'appui (20, 89) est formée par un chanfrein incliné suivant un angle (19, 90) à la face de liaison (16) en direction vers l'arête frontale avant (11) et/ou vers l'arête frontale arrière (25) de la pièce d'insertion (9, 84) et s'étendant en direction d'une largeur du coussin (4).

14. Siège de véhicule selon l'une ou plusieurs des revendications 1 à 13, caractérisé en ce que la pièce d'insertion (9, 84) s'étend sur toute la largeur (67) du corps d'appui (6).

15. Siège de véhicule selon l'une ou plusieurs des revendications 1 à 14, caractérisé en ce que la pièce d'insertion (9) s'étend seulement sur une partie d'une épaisseur (12) de la pièce de support (7) et fait saillie sur sa longueur s'étendant parallèlement à la largeur (67) du coussin (4) par des saillies (79) en forme de pied d'appui jusqu'au voisinage du côté inférieur (13) de la pièce de support (7) et, respectivement à une face frontale (65) de la branche (66).

16. Siège de véhicule selon l'une ou plusieurs des revendications 1 à 15, caractérisé en ce que la pièce d'insertion (9) fait saillie sur une zone partielle d'une épaisseur (76) de la pièce de garniture (8) qui correspond au maximum à 30% de l'épaisseur (76) de la pièce de garniture (8).

17. Siège de véhicule selon l'une ou plusieurs des revendications 1 à 16, caractérisé en ce que la pièce d'insertion (9) est pourvue de plusieurs surfaces d'appui (20) décalées les unes par rapport aux autres en direction de la profondeur (17) de la pièce d'insertion (9), disposées par exemple en forme d'écailles ou d'une manière étagée.

18. Siège de véhicule selon l'une ou plusieurs des revendications 1 à 17 caractérisé en ce que la mousse de matière synthétique de la pièce d'insertion (9, 84) est peu combustible ou est mélangée avec un agent pare-flammes (43) pour augmenter la résistance à la combustion.

19. Siège de véhicule selon l'une ou plusieurs des revendications 1 à 18, caractérisé en ce qu'il est disposé entre la pièce d'insertion (9) et une pièce d'insertion additionnelle (84) et/ou l'arête frontale arrière (25) de la pièce de support (7) un noyau de ressort (10).

20. Siège de véhicule selon l'une ou plusieurs des revendications 1 à 19, caractérisé en ce qu'un côté supérieur (40) du noyau de ressort (10) est disposé à une certaine distance (41) en dessous du côté supérieur et/ou inférieur (14, 13) de la pièce de support (7).

21. Siège de véhicule selon l'une ou plusieurs des revendications 1 à 20, caractérisé en ce qu'il est disposé entre le noyau de ressort (10) et le côté inférieur (13) de la pièce de support (7) une couche intermédiaire (33) en un matériau résistant à l'usure respectivement résistant au frottement comme couche de répartition de la pression.

22. Siège de véhicule selon l'une ou plusieurs des revendications 1 à 21, caractérisé en ce qu'il est disposé sur le côté inférieur (13, 22) de la pièce de support (7) et/ou de la pièce d'insertion (9, 84) une couche de protection (26), par exemple un tissu de revêtement peu inflammable, de préférence par des endroits de colle espacés les uns des autres.

23. Siège de véhicule selon l'une ou plusieurs des revendications 1 à 22, caractérisé en ce que la couche médiane (53) est constituée d'une nappe (59) en au moins une couche (58) de fibres ou fils aiguilletés ou liés thermiquement (56, 57) en matière synthétique et/ou en des matières naturelles qui sont aiguilletées de préférence sur une couche de support (54).

24. Siège de véhicule selon l'une ou plusieurs des revendications 1 à 23, caractérisé en ce que la couche de support (54) est formée par une grille ou un filet en fibres respectivement fils (60), par exemple en polyester ou en polyamide 100% et/ou qu'elle a un poids de 15 à 90 g/m², de préférence de 35 g/m².

25. Siège de véhicule selon l'une ou plusieurs des revendications 1 à 24, caractérisé en ce que la couche de support (54) est formée par un tissu ou tricot en fibres ou fils (60) en matière synthétique, notamment en un polyacrylate préoxydé et/ou un polyamide en des filaments de verre et/ou en des matières naturelles.

26. Siège de véhicule selon l'une ou plusieurs des revendications 1 à 25, caractérisé en ce que la couche de support (54) est réalisée sous forme de filet et que les fils respectivement fibres du filet sont en polyester ou en polyamide.

27. Siège de véhicule selon l'une ou plusieurs des revendications 1 à 26, caractérisé en ce qu'une grosseur des fibres respectivement fils (60) présente un dtex de 22/1 respectivement 44F10.

28. Siège de véhicule selon l'une ou plusieurs des revendications 1 à 27, caractérisé en ce que le filet ou la grille respectivement le tissu ou tricot formant la couche de support (54) comporte 80 à 180, de préférence 130 à 140 rangées de mailles/longueur dm.

29. Siège de véhicule selon l'une ou plusieurs des revendications 1 à 28, caractérisé en ce que le filet ou la grille respectivement le tissu ou tricot formant la couche de support (54) présente 40 à 140, de préférence 60 à 120 rangées de mailles/longueur dm.

30. Siège de véhicule selon l'une ou plusieurs des revendications 1 à 29, caractérisé en ce que le tissu ou tricot est constitué de trois fois 400 à 1500, de préférence de 580 à 1160 fils/unités de surface.

31. Siège de véhicule selon l'une ou plusieurs des revendications 1 à 30, caractérisé en ce que le filet de la couche de support (54) a une extension longitudinale et transversale comprise entre 30 et 50%, de préférence entre 34 et 44%.

32. Siège de véhicule selon l'une ou plusieurs des revendications 1 à 31 caractérisé en ce que le filet formant la couche de support (54) résiste à une force de traction maximale longitudinale et/ou transversale entre 200 et 500N.

33. Siège de véhicule selon l'une ou plusieurs des revendications 1 à 32, caractérisé en ce que la solidité à la déchirure du filet formant la couche de support (54) en travers et en longueur est comprise entre 240 et 500N/cm.

34. Siège de véhicule selon l'une ou plusieurs des revendications 1 à 33 caractérisé en ce que la couche de fibres (58) est constituée principalement de fibres ou fils (56, 57) en des matières naturelles par exemple en laine ou en coton qui est mélangée de préférence avec une part comprise entre 5 et 20%, de préférence avec 10% de fibres ou fils (56, 57) en polypropylène respectivement polyéthylène ou polyacrylate.

35. Siège de véhicule selon l'une ou plusieurs des revendications 1 à 34, caractérisé en ce que la couche de fibres (58) est constituée principalement de fibres respectivement fils (56, 57) en matière synthétique, par exemple en polypropylène et/ou polyéthylène et/ou polyacrylate et/ou polybenzimidazol et en ce qu'au moins une part de ces fibres respectivement fils (56, 57) a une température de fusion supérieure à 1000°C.

36. Siège de véhicule selon l'une ou plusieurs des revendications 1 à 35, caractérisé en ce qu'une partie des fibres respectivement fils (56, 57) de la couche de fibres (58) est réalisée en matière synthétique et que celle-ci est constituée de matière thermoplastique.

37. Siège de véhicule selon l'une ou plusieurs des revendications 1 à 36, caractérisé en ce que les fibres respectvement fils (56, 57) de la couche de fibres (58) présentent des matières synthétiques avec un point de plastification respectivement de ramollissement entre 100 et 150 degrés C, de préférence entre 100 et 120 degrés C.

38. Siège de véhicule selon l'une ou plusieurs des revendications 1 à 37, caractérisé en ce que les fibres respectivement fils (56, 57) de la couche de fibres (58), notamment en polypropylène ou aramide ou polyamide, ont une longueur de 40 à 80 mm.

39. Siège de véhicule selon l'une ou plusieurs des revendications 1 à 38 caractérisé en ce que les fibres respectivement fils (56, 57) de la couche de fibres (58), notamment en polypropylène ou aramide ou polyamide, sont fabriquées à partir de filaments.

40. Siège de véhicule selon l'une ou plusieurs des revendications 1 à 39, caractérisé en ce que la nappe (59) est compactée thermiquement à un grammage compris entre 300 et 500 g/m².

41. Siège de véhicule selon l'une ou plusieurs des revendications 1 à 40, caractérisé en ce que la couche intermédiaire (51) est reliée aux fibres respectivement fils (56, 57) de la couche de fibres (58) de la nappe (59) par une opération d'aiguilletage et/ou que la couche intermédiaire (51) est disposée dans une zone de surface de la nappe (59) opposée à la couche de support (54).

42. Siège de véhicule selon l'une ou plusieurs des revendications 1 à 41, caractérisé en ce que la couche intermédiaire (51) est constituée d'un filet ou grille ou tissu ou tricot ou analogue en fibres et/ou fils (56, 57) en verre et/ou métal et/ou céramique et/ou carbone.

43. Siège de véhicule selon l'une ou plusieurs des revendications 1 à 42, caractérisé en ce que la couche intermédiaire (51) a un poids d'environ 80 à 185 g/m², de préférence de 120 g/m².

44. Siège de véhicule selon l'une ou plusieurs des revendications 1 à 43, caractérisé en ce qu'un dispositif de liaison est disposé entre la nappe (59) respectivement la couche de support (54) et le tissu de revêtement (62).

45. Siège de véhicule selon l'une ou plusieurs des revendications 2 à 44, caractérisé en ce que le dispositif de liaison est formé par un ruban auto-accrochant (64) ou une bande de support d'une fermeture éclair.
